# EUROPEAN PATENT SPECIFICATION

(11) **EP 4 462 851 B1**
(45) Date of publication and mention of the grant of the patent: **11.03.2026**
(21) Application number: 23878806.1
(22) Date of filing: 24.08.2023
(51) Int. Cl.: H04W 24/02, H04W 4/021, H04L 67/52

(54) **NETWORK ACCELERATION METHOD AND APPARATUS**
NETZWERKBESCHLEUNIGUNGSVERFAHREN UND -VORRICHTUNG
PROCÉDÉ ET APPAREIL D'ACCÉLÉRATION DE RÉSEAU

(30) Priority: 17.10.2022 CN 202211284598
(43) Date of publication of application: 13.11.2024
(73) Proprietor: Honor Device Co., Ltd., Shenzhen, Guangdong 518040 (CN)
(72) Inventor: WANG, Jinxiang, Shenzhen, Guangdong 518040 (CN); LIANG, Henghui, Shenzhen, Guangdong 518040 (CN); CHEN, Zhihui, Shenzhen, Guangdong 518040 (CN)
(74) Representative: Goddar, Heinz J.
(86) International application number: PCT/CN2023/114694
(87) International publication number: WO 2024/082811

(56) References cited:
- CN-A- 109 743 764
- CN-A- 109 890 067
- CN-A- 111 526 246
- CN-A- 114 173 372
- CN-A- 115 002 849
- CN-A- 115 002 850
- CN-A- 115 022 897
- CN-A- 115 065 996
- US-A1- 2017 026 786
- US-A1- 2020 280 922

## Description

### TECHNICAL FIELD

This application relates to the field of terminals, and in particular, to a network acceleration method and an apparatus.

### BACKGROUND

With the rapid growth of the Internet, people are increasingly inseparable from the Internet in daily life. People often access Internet at fragment time, such as watching short videos using social short video applications while waiting/taking an elevator at the fragment time.

However, when a user gets into the elevator during accessing the Internet, a network signal (a cellular network signal or a wireless-fidelity (wireless-fidelity, Wi-Fi) network signal) of an electronic device (for example, a cell phone) used by the user is often suddenly deteriorated or even dropped out of the Internet due to a shielding effect of the elevator on the network signal, which results in lagging Internet of the user, leading to a poor user experience.

CN 115065996 A discloses a method for generating an electronic fence, a terminal and a communication system. According to the method, the electronic fence of a certain position (such as an elevator entrance or the position where equipment providing a Wi-Fi network is located) can be calculated, and when the terminal enters or leaves the electronic fence of the position, the terminal can trigger execution of a certain function. For example, when a terminal determines that it enters an electronic fence at an elevator entrance, a connected Wi-Fi network may be switched to a cellular network.

### SUMMARY

Embodiments of this application provide a network acceleration method and an apparatus capable of solving a problem of lagging Internet of a user after entering an elevator.

According to a first aspect, embodiments of this application provide a network acceleration method, applied to an electronic device, including: The electronic device runs a first application; the electronic device obtains a quality of experience, QoE, measurement result of the first application; the electronic device collects lagging fingerprint information if the QoE measurement result appears to be lagging; the electronic device revises at least one piece of fence data of a geofence to which a target elevator corresponds based on the lagging fingerprint information; the electronic device predicts whether a user waits to get into the target elevator based on revised at least one piece of fence data of a geofence to which the target elevator corresponds; and the first application of the electronic device performs network acceleration processing if determining that the user waits to get into the target elevator, where the network acceleration processing includes at least one of caching operation data of the first application in advance, reducing a frame rate of the first application, reducing a code rate of the first application, or reducing resolution of the first application.

Based on the network acceleration method provided in embodiments of this application, a foreground application (the first application) can perform network acceleration processing such as caching application data in advance and/or reducing resolution, a frame rate, or a code rate during waiting to get into the target elevator of the user (that is, the user waits near an elevator entrance), to avoid a problem of lagging Internet after the user gets into the elevator, so that subsequently the user can continue to view relevant content of the first application in the elevator (for example, continue to browse a short video, or continue to watch a movie).

In one possible implementation, the electronic device stores at least one piece of fence data of a geofence to which an elevator corresponds, where the fence data includes an address of a Wi-Fi access point to which the electronic device can be connected near the elevator and searchable Wi-Fi list information, and the Wi-Fi list information includes an address of at least one Wi-Fi access point; and that the electronic device predicts whether a user waits to get into a target elevator includes: Target fence data is obtained from the at least one piece of fence data of the geofence to which the elevator corresponds, where the address of the Wi-Fi access point that can be connected to, indicated by the target fence data, is the same as an address of a Wi-Fi access point to which the electronic device is currently connected; the electronic device obtains current first Wi-Fi list information, where the current first Wi-Fi list information includes an address of a Wi-Fi access point that the electronic device can currently search; and the user is determined to wait to get into the target elevator if a quantity of same addresses of Wi-Fi access points between the current first Wi-Fi list information and searchable Wi-Fi list information indicated by the target fence data satisfies a first condition. That is, the electronic device checks whether (a BSSID of) the address of the currently connected Wi-Fi access point has corresponding fence data. If there is fence data (target fence data) for the BSSID corresponding to the connected Wi-Fi, the electronic device may perform Wi-Fi information scanning to obtain the current first Wi-Fi list information, and compare the current first Wi-Fi list information with the searchable Wi-Fi list information indicated by the target fence data. If the quantity of the same addresses of the Wi-Fi access points between the current first Wi-Fi list information and the searchable Wi-Fi list information indicated by the target fence data satisfies the first condition (for example, the quantity of the same addresses of the Wi-Fi access points is greater than 80%). To be specific, similarity of the Wi-Fi list information searched by the user at a current location with the Wi-Fi list information corresponding to the target elevator is great, and it indicates that the user is close to the target elevator and waits to get into the target elevator (it is understood that the Wi-Fi list information having great similarity to the Wi-Fi list information corresponding to the target elevator may be searched near the target elevator).

In one possible implementation, that the Wi-Fi list information further includes signal strength of a network corresponding to the address of the Wi-Fi access point, before the determining that the user waits to get into the target elevator, the method further includes: A quantity of matchable Wi-Fi network access points in the same addresses of the Wi-Fi network access points satisfies a second condition, and the matchable Wi-Fi network access point is a Wi-Fi network access point in the same address of the Wi-Fi network access point for which a difference in corresponding signal strength of the network is less than a first threshold. In this way, based on the quantity of the same addresses of the Wi-Fi network access points and the quantity of Wi-Fi network access points whose signal strength difference of the network is smaller than the first threshold, it can be determined more accurately whether the user waits to get into the target elevator (that is, whether the user arrives at the elevator entrance), to reduce an error.

In one possible implementation, the first condition is that the quantity of the same addresses of the Wi-Fi access points between the current first Wi-Fi list information and the target fence data exceeds a second threshold, or the first condition is that a ratio of the quantity of the same addresses of the Wi-Fi access points between the current first Wi-Fi list information and the target fence data to a quantity of all Wi-Fi access points in the target fence data exceeds a third threshold. A greater quantity of the same addresses of the Wi-Fi access point between the current first Wi-Fi list information and the target fence data indicates great similarity of the Wi-Fi list information searched by the user at the current location (the current first Wi-Fi list information) and the Wi-Fi list information corresponding to the target elevator.

In one possible implementation, the second condition is that the quantity of the matchable Wi-Fi network access points exceeds a fourth threshold, or the second condition is that a ratio of the quantity of the matchable Wi-Fi network access points to a quantity of all Wi-Fi access points in the target fence data exceeds a fifth threshold. A greater quantity of the matchable Wi-Fi network access points indicates greater similarity of the Wi-Fi list information (the current first Wi-Fi list information) searched by the user at the current location and the Wi-Fi list information corresponding to the target elevator.

In one possible implementation, the at least one fence data stored by the electronic device is obtained in advance in the following steps: Second Wi-Fi list information is collected when the user gets into or off the elevator, when determining, based on a changing state of acceleration, that the user gets into or off the elevator, and the electronic device is connected to a Wi-Fi network; and when a quantity of records of the second Wi-Fi list information exceeds the sixth threshold, all Wi-Fi access points, in the second Wi-Fi list information, having a same address of the Wi-Fi access point are selected as the Wi-Fi access point corresponding to the fence data of the one geofence, and signal strength of a network of the Wi-Fi access point corresponding to the fence data is an average of signal strength of networks of the Wi-Fi access points having the same address. That is, the electronic device may generate the fence data based on information collected by the electronic device.

In one possible implementation, the at least one piece of fence data stored by the electronic device is obtained in advance in the following steps: collecting second Wi-Fi list information when the user gets into or off the elevator, when determining, based on a changing state of acceleration, that the user gets into or off the elevator, and the electronic device is connected to a Wi-Fi network; sending the second Wi-Fi list information to a server; and receiving the at least one piece of fence data of the geofence from the server. That is, the electronic device may send information collected by the electronic device to the server and the server generates the fence data.

In one possible implementation, before the obtaining target fence data from the at least one piece of fence data, the method further includes: determining that the user converts from a motion state to a stop state based on acceleration of the electronic device, where the electronic device is connected to a Wi-Fi network. It can be understood that the user generally converts from walking to stopping while waiting for the elevator, and the electronic device can determine that the user converts from the motion state to the stop state based on a change in speed, triggers a prediction of whether the user waits to get into the target elevator, and can further determine whether the user waits to get into the target elevator.

In one possible implementation, the method further includes: determining that signal strength of the Wi-Fi network to which the electronic device is currently connected is less than a seventh threshold, and switching the currently connected Wi-Fi network to a cellular network. When the signal strength of the Wi-Fi network to which the electronic device is currently connected is less than the seventh threshold, it can be considered that closing of the elevator after the user gets into the elevator causes a sharp drop in the signal strength of the currently connected Wi-Fi network. At this point, the electronic device can switch the data flow of the application from the Wi-Fi network to the cellular network (the signal covers the corresponding cellular network of the elevator), and guarantee that the user can access Internet through the cellular network after getting into the elevator, to greatly reduce a probability of lagging Internet of the application, and better improve a user Internet experience.

In one possible implementation, the electronic device includes a fence management module configured to collect second Wi-Fi list information of the user when it is determined that the user gets into or off the elevator and the electronic device is connected with a Wi-Fi network, and cluster, based on the second Wi-Fi list information, to generate the at least one piece of fence data of the geofence to which the elevator corresponds, or send the second Wi-Fi list information to the server, and receive the at least one piece of fence data of the geofence to which the elevator corresponds from the server.

In one possible implementation, the electronic device further includes a perception module, and the method further includes: The perception module perceives that the first application is launched, and whether the first application supports network acceleration is queried, where the perception module includes an application configuration library in which information of whether a plurality of application programs support the network acceleration is stored, and the plurality of application programs include the first application, where the plurality of application programs in the application configuration library are application programs that need the network acceleration determined based on user data consumption and user usage preference for an application, or the plurality of application programs in the application configuration library are applications that need the network acceleration determined based on manual setting by the user.

In one possible implementation, the electronic device further includes a decision module, and the method further includes: The perception module sends a network quality assessment request to the decision module if it is determined that the first application supports the network acceleration, where the network quality assessment request includes an application identifier of the first application, configuration information of the application, and a criterion for network quality assessment, and the configuration information of the application includes a header feature of a data packet when the first application transmits a data flow.

In one possible implementation, a kernel layer of the electronic device further includes a flow reporting module, and the method further includes: The decision module registers a message monitoring hook with the flow reporting module, where the message monitoring hook is used to periodically probe a path of a network channel used by the first application and monitor a communication parameter and statistical information of the data flow transmitted through the network channel used by the first application.

In one possible implementation, the electronic device further includes a flow management module, and the method further includes: The flow reporting module periodically reports the communication parameter and the statistical information of the data flow of the first application to the flow management module, where the communication parameter includes at least one of a protocol type, a source Internet Protocol IP address and port/destination IP address and port, or a message feature, and the statistical information includes at least one of round trip time RTT, a packet loss rate, a quantity of bytes transceived, or a rate; the flow management module periodically performs network quality assessment based on the communication parameter and the statistical information to obtain a current quality of experience QoE measurement result; and the flow management module periodically reports the current QoE measurement result to the decision module.

In one possible implementation, if the QoE measurement result appears to be lagging, the method further includes: The decision module reports lagging information to the fence management module; after receiving the lagging information, the fence management module collects lagging fingerprint information, revises Wi-Fi list information corresponding to the at least one elevator based on the lagging fingerprint information, and filters Wi-Fi list information corresponding to a first elevator, where the electronic device is connected to a first Wi-Fi access point at the first elevator, the fence management module does not receive the lagging information reported by the decision module when the electronic device is connected to the first Wi-Fi access point, and the lagging fingerprint information includes a Wi-Fi list collected after the lagging information is received.

In one possible implementation, the electronic device further includes a network acceleration service module, and the method further includes: The first application sends a registration request to the network acceleration service module, where the registration request is used to request an elevator prediction service in order for the first application to perceive whether the user arrives at an elevator entrance to wait to get into the target elevator; the network acceleration service module sends the registration request to the perception module; and the perception module sends the registration request to the fence management module.

In one possible implementation, the method further includes: After the fence management module receives the registration request, if it is determined that the first application supports the network acceleration, the first application runs in a foreground, and the first application have an elevator prediction permission, application information of the first application is recorded, and a registration result is sent to the perception module, where the registration result appears to be successful; the perception module sends the registration result to the network acceleration service module; and the network acceleration service module sends the registration result to the first application.

In one possible implementation, the method further includes: The fence management module monitors a motion state change of the user; whether there is the geofence to which the elevator corresponds is detected when it is determined that the user gets into or off the elevator based on the motion state change of the user; and the user is determined to arrive at the elevator entrance to wait to get into the target elevator if the geofence to which the elevator corresponds is detected, where the motion state change of the user includes the user converting from a walking state to a stop state, and maintaining a relatively still state.

In one possible implementation, before the detecting whether there is the geofence to which the elevator corresponds, the method further includes: determining whether current time is within a preset time period, where the preset time period is determined based on rush hour.

In one possible implementation, that the fence management module detects whether there is the geofence to which the elevator corresponds around the elevator includes: Whether a BSSID of the Wi-Fi access point to which the electronic device is currently connected has corresponding fence data is checked; the fence management module obtains the current first Wi-Fi list information if the BSSID of the Wi-Fi access point to which the electronic device is currently connected corresponds to the target fence data, where the current first Wi-Fi list information includes the address of the Wi-Fi access point that the electronic device can currently search; and it is determined that there is the geofence to which the elevator corresponds around if the quantity of the same addresses of the Wi-Fi access points between the current first Wi-Fi list information and the searchable Wi-Fi list information indicated by the target fence data satisfies the first condition.

In one possible implementation, the method further includes: the fence management module notifies the perception module of an event of the user arriving at the elevator entrance to wait for the elevator, the perception module notifies the network acceleration service module of the event of the user arriving at the elevator entrance to wait for the elevator, and the network acceleration service module notifies the first application of the event of the user arriving at the elevator entrance to wait for the elevator; and that the first application of the electronic device performs network acceleration processing includes: The first application receives the event of the user arriving at the elevator entrance to wait for the elevator, and performs network acceleration processing.

In one possible implementation, the electronic device further includes a policy execution module and a path management module, and the method further includes: The fence management module determines the user getting into the elevator, and notifies the perception module of an event of the user getting into the elevator; the perception module notifies the decision module of the event of the user getting into the elevator; the decision module sends a better-path request to the path management module when receiving the event of the user getting into the elevator, where the better-path request is used to request a better-quality network channel than the current network channel; the path management module activates and probes network quality of each network channel, determines that there is the better-quality network channel than the current network channel, and notifies the decision module of the better network channel; the decision module indicates the policy execution module to switch the data flow of the first application to the better network channel; and the policy execution module switches the data flow of the first application to the better network channel.

In one possible implementation, the method further includes: The fence management module detects the user getting off the elevator, and notifies the perception module of an event of the user getting off the elevator; the perception module notifies the decision module of the event of the user getting off the elevator; and the decision module switches the data flow of the first application back to the Wi-Fi network after receiving the event of the user getting off the elevator.

In one possible implementation, when the first application is switched to a background or shut down, the method further includes: The first application sends a de-registration request to the network acceleration service module, where the de-registration request is used to request to stop the elevator prediction service; the network acceleration service module sends the registration request to the perception module; the perception module sends the de-registration request to the fence management module; and the fence management module stops the elevator prediction service of the first application, and no longer notifies the first application of whether the user gets into the elevator.

In one possible implementation, the method further includes: The perception module notifies the decision module of stopping QoE measurement for the first application; the decision module notifies the policy execution module of stopping the QoE measurement for the first application; and the policy execution module stops the QoE measurement for the first application.

According to a second aspect, this application provides a computer-readable storage medium. The computer-readable storage medium includes computer instructions. The computer instructions, when run on an electronic device, enable the electronic device to perform the method in any one of the first aspect and the possible designs thereof.

According to a third aspect, an electronic device is provided. The electronic device comprises a processor, wherein the processor is configured to run a computer program stored in a memory, to enable the electronic device to implement the method according to the first aspect or any of its implementations.

It can be understood that, for the beneficial effects that can be achieved by the computer-readable storage medium described in the second aspect, refer to the beneficial effects in any one of the first aspect and possible designs. Details are not described herein again.

### BRIEF DESCRIPTION OF DRAWINGS

FIG. 1A is a schematic diagram of a network channel according to an embodiment of this application;
FIG. 1B is a schematic diagram of a hardware structure of an electronic device according to an embodiment of this application;
FIG. 2 is a schematic diagram of a software structure of an electronic device according to an embodiment of this application;
FIG. 3A to FIG. 3D are a schematic diagram of a display according to an embodiment of this application;
FIG. 4 is another schematic diagram of a display according to an embodiment of this application;
FIG. 5A to FIG. 5D are a schematic diagram of a module interaction according to an embodiment of this application;
FIG. 6 is a schematic diagram of a fence of an elevator according to an embodiment of this application;
FIG. 7 is a schematic flowchart according to an embodiment of this application;
FIG. 8 is another schematic flowchart according to an embodiment of this application;
FIG. 9 is still another schematic diagram of a display according to an embodiment of this application;
FIG. 10 is a schematic diagram of detecting a message according to an embodiment of this application;
FIG. 11 is a schematic diagram of a rate feature of a data flow of a short video application according to an embodiment of this application;
FIG. 12 is another schematic diagram of a rate feature of a data flow of a short video application according to an embodiment of this application;
FIG. 13 is another schematic diagram of a fence of an elevator according to an embodiment of this application; and
FIG. 14 is a schematic diagram of an electronic device performing different processing at different moments according to an embodiment of this application.

### DESCRIPTION OF EMBODIMENTS

Technical solutions in embodiments of this application are described below with reference to the accompanying drawings in embodiments of this application. In the descriptions of this application, unless otherwise specified, "at least one" means one or more, and "a plurality of" means two or more. In addition, to clearly describe the technical solutions in embodiments of this application, terms such as "first" and "second" are used in embodiments of this application to distinguish between same items or similar items that provide basically same functions or purposes. A person skilled in the art may understand that the terms "first", "second", and the like, and do not limit a quantity and an execution order, and the terms "first", "second", and the like are not limited to be necessarily different.

For clarity and brevity of the following embodiments, related concepts or technologies are briefly described first.

Quality of experience (quality of experience, QoE): The quality of experience means an end user's subjective perception of performance of services provided by a mobile network. The QoE can represent experiences and feelings of the end user for services and networks in a close-to-quantitative method, and reflect a gap between quality of the current services and networks, and user expectations.

From a perspective of a mobile communication network, the best solution to obtain better QoE is to provide good end-to-end quality of service (quality of service, QoS). QoS in a broad sense is "an aggregate effect of service performance that determines user satisfaction" and includes a plurality of levels of broad content. QoS in a narrow sense is a performance index of underlying grouped data transmission, such as a latency, jitter, bandwidth, or a bit error. A QoS mechanism is primarily responsible for service management and providing service differentiation from a perspective of a network, and a network entity handles different services based on different quality requirements. However, experiencing the QoS from the end user's perspective is a broader and more subjective problem, namely, a category defined based on the QoE.

Hook (HOOK) function: The hook function is actually a program segment of processing a message. Whenever a specific message is sent, the hook function may first capture the message before a destination window is not reached, that is, the hook function obtains control first. The hook function may process (change) the message, may continue to deliver the message without processing, or may force an end of the delivery of the message.

Data flow: In embodiments of this application, a data sequence transmitted between two electronic devices (for example, a cell phone and a server of an application program) is denoted as the data flow. The data flow may also be referred to as a service flow. In actual application, based on a service scenario type of the data flow, the data flow may include a video flow, an audio flow, a downloading flow, a session flow, and the like.

Geofence: A virtual boundary around a specific location is created by using a positioning system network (for example, a global positioning system (global positioning system, GPS) network, and a beidou navigation satellite system (beidou navigation satellite system, BDS) network) and/or a local radio frequency identification (for example, a Wi-Fi access point (a Wi-Fi node), and a Bluetooth beacon). The virtual boundary may be referred to as the geofence. The geofence may be paired with a hardware/software application program, so that the application program can respond to a geographic boundary in some way as indicated by a program parameter.

In embodiments of this application, the specific location may be an elevator, to be specific, the virtual boundary may be created around the elevator, and the virtual boundary around the elevator is the geofence to which the elevator corresponds (the geofence may simply be referred to as a fence). The fence to which the elevator corresponds may be associated with an application program such as a video application or a game application. The application program such as the video application or the game application may be processed accordingly based on whether an electronic device is in the fence to which the elevator corresponds. For example, when the electronic device is in the fence to which the elevator corresponds, the video application may cache a video that is currently playing or a video that is about to play, or reduce resolution of the video. When the electronic device is not in the fence to which the elevator corresponds, the video application may stop caching the video that is currently playing or the video that is about to play, or restore the resolution of the video.

Network channel: The network channel is a channel for interacting data between two electronic devices. For ease of description, a network channel established between one electronic device and another electronic device through a wireless network interface card may be denoted as a Wi-Fi network; and a network channel established between one electronic device and another electronic device through a data service network interface card is denoted as a cellular network.

The wireless network interface card is an apparatus that supports Internet access through a wireless local area network (Wireless Local Area Network, WLAN). The data service network interface card is an apparatus that supports Internet access to mobile communication technologies such as long term evolution (long term evolution, LTE), 5th generation mobile communication technology (5th generation mobile communication technology, 5G), global system for mobile communications (global system for mobile communications, GSM), and general packet radio service (general packet radio service, GPRS).

In actual application, quality of the network channel varies with an environment in which a user is located. For example, when the user is in a closed metal environment, such as in an elevator, after the elevator is closed, absorption of an electromagnetic wave signal by a metal door of the elevator causes substantial attenuation of Wi-Fi network signals. This causes lagging Internet of the user, resulting in a poor user experience.

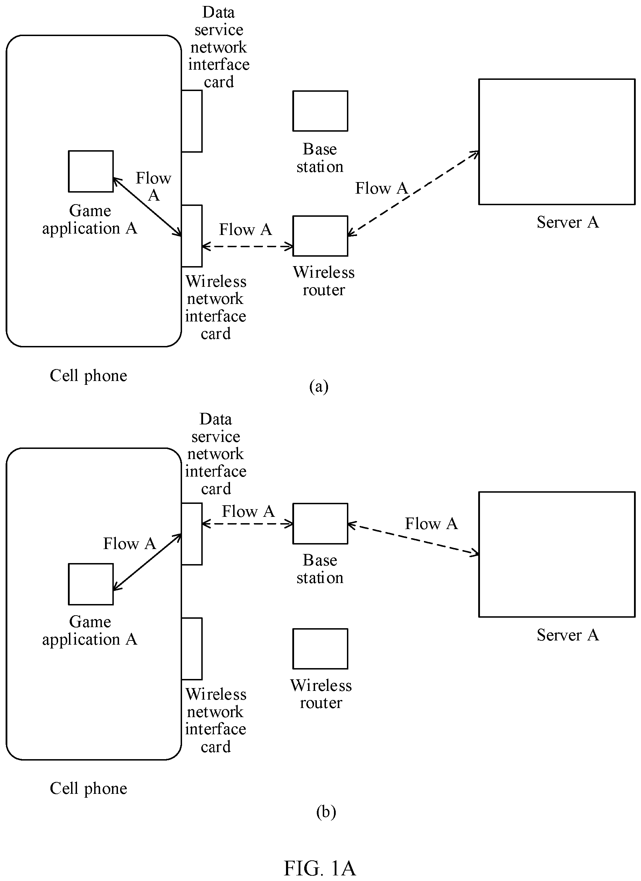

An example is used in which the electronic device is a cell phone to illustrate an effect of an environment in which a user is located on quality of a network channel. Refer to (a) in FIG. 1A. The user plays a game using a game application A in a cell phone. The application A in the cell phone establishes a network connection with a server A of the application A through a wireless network interface card in the cell phone, and a data flow A generated between the application A and the server A (for example, a data flow generated during a game battle) is transmitted through a Wi-Fi network between the wireless network interface card in the cell phone and a wireless router. When the user gets into an elevator, closing of the elevator causes a sharp drop in Wi-Fi network signals, which in turn causes reducing of the data flow A, and a lagging phenomenon appears when the user uses the application A, resulting in a poor user experience.

To solve the above problem, refer to (b) in FIG. 1A. The cell phone may switch the data flow A to a cellular network between a data service network interface card of the cell phone and a base station to transmit the data flow A with the server A through the cellular network, thereby reducing lagging Internet due to a sharp drop in Wi-Fi network signals.

However, an opportunity of the cell phone switching the Wi-Fi network to the cellular network is that the cell phone switches the Wi-Fi network to the cellular network after detecting that a user takes the elevator through an acceleration sensor built in the cell phone. That is, the cell phone determines, by detecting a moving state of the user after the user gets into the elevator and the elevator runs, whether to switch the Wi-Fi network to the cellular network. For the user, at this point the elevator closes a door and runs. This causes reducing of the data flow A of the application A, resulting in lagging Internet of the user.

In view of this, embodiments of this application provide a network acceleration method. During a user waiting near an elevator entrance, an operating system of an electronic device can notify a currently running application of an event of the user waiting for an elevator, so that the currently running application can perform processing such as caching application data in advance and/or reducing resolution based on the event of the user waiting for the elevator. Therefore, the user can subsequently continue to view relevant content of the application (for example, continue to watch a short video, or continue to watch a movie) in the elevator. Further, at the moment of the elevator closing the door, the electronic device can switch a data flow of the application from a Wi-Fi network to a cellular network, thereby ensuring that the user can still have a smooth Internet experience after getting into the elevator, greatly reducing a probability of lagging Internet of the application, and better improving a user Internet experience.

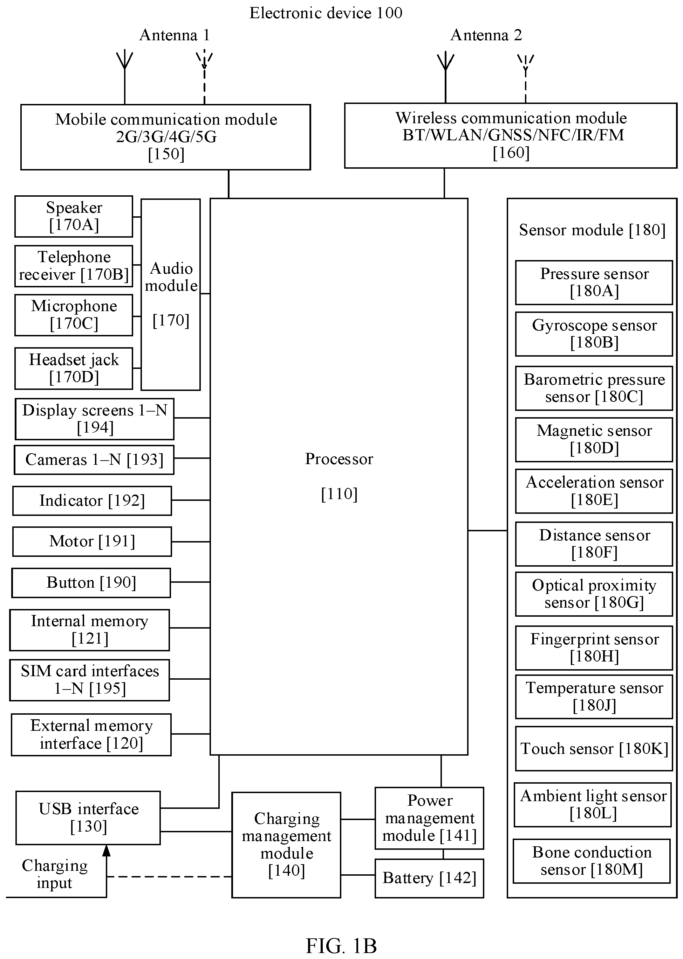

The network acceleration method provided in embodiments of this application is applicable to an electronic device. FIG. 1B is a schematic diagram of a structure of an electronic device 100 according to an embodiment of this application.

As shown in FIG. 1B, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a telephone receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, and a touch sensor 180K, an ambient light sensor 180L, a bone conduction sensor 180M, and the like.

It may be understood that the schematic structure in this embodiment constitutes no specific limitation on the electronic device 100. In some other embodiments, the electronic device 100 may include more or fewer components than those shown in the figure, or some components may be combined, or some components may be split, or components are arranged in different manners. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors.

The controller may be a nerve center and a command center of the electronic device 100. The controller may generate an operation control signal based on instruction operation code and a time-sequence signal, and implement control obtaining and executing of instructions.

A memory may also be disposed in the processor 110, configured to store instructions and data. In some embodiments, the memory in the processor 110 is a cache memory. The memory may store instructions or data recently used or cyclically used by the processor 110. If the processor 110 needs to use the instruction or the data again, the processor may directly call the instruction or the data from the memory, repeated access is avoided, and waiting time of the processor 110 is reduced, thereby improving system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that a schematic interface connection relationship between the modules in this embodiment is merely an example for description, and constitutes no limitation on the structure of the electronic device 100. In some other embodiments, the electronic device 100 may alternatively use an interface connection manner different from that in the foregoing embodiment, or use a combination of a plurality of interface connection manners.

The charging management module 140 is configured to receive charging input from the charger. While the charging management module 140 charges the battery 142, the power management module 141 may also supply power to the electronic device.

The power management module 141 is configured to be connected to the battery 142, the charging management module 140, and the processor 110. The power management module 141 receives input from the battery 142 and/or the charging management module 140, and supplies power to the processor 110, the internal memory 121, the external memory, the display screen 194, the camera 193, the wireless communication module 160, and the like. In some other embodiments, the power management module 141 may alternatively be disposed in the processor 110. In some other embodiments, the power management module 141 and the charging management module 140 may also be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device 100 may be configured to cover one or more communication frequency bands. Different antennas may further be multiplexed to improve utilization of the antennas. For example, the antenna 1 may be multiplexed into a diversity antenna of a wireless local area network.

The mobile communication module 150 may provide a solution to wireless communication such as 2G/3G/4G/5G applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send the electromagnetic wave to the modem processor for demodulation. The mobile communication module 150 may further amplify a signal modulated by the modem processor, and convert the signal into an electromagnetic wave by using the antenna 1 for radiation.

The modem processor may include a modulator and a demodulator. The modulator is configured to modulate a low frequency baseband signal to be sent into a medium and high frequency signal. The demodulator is configured to demodulate the received electromagnetic wave signal into a low-frequency baseband signal. Then the demodulator transfers the low-frequency baseband signal obtained through demodulation to the baseband processor for processing. The low-frequency baseband signal is processed by the baseband processor and then transferred to an application processor. The application processor outputs a sound signal through an audio device (this is not limited to the speaker 170A, the telephone receiver 170B, and the like), or displays an image or a video through the display screen 194.

The wireless communication module 160 may provide a solution to wireless communication applied to the electronic device 100, for example, a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components into which at least one communication processing module is integrated. The wireless communication module 160 receives an electromagnetic wave by using the antenna 2, performs frequency modulation on and filters the electromagnetic wave signal, and sends a processed signal to the processor 110. The wireless communication module 160 may further receive a to-be-sent signal from the processor 110, perform frequency modulation on and amplify the to-be-sent signal, and convert the to-be-sent signal into an electromagnetic wave by using the antenna 2 for radiation.

In some embodiments, the antenna 1 and the mobile communication module 150 of the electronic device 100 are coupled, and the antenna 2 and the wireless communication module 160 of the electronic device 100 are coupled, so that the electronic device 100 can communicate with a network and another device by using a wireless communication technology. The wireless communication technology may include a GSM, a GPRS, code division multiple access (code division multiple access, CDMA), wideband code division multiple access (wideband code division multiple access, WCDMA), time-division code division multiple access (time-division code division multiple access, TD-SCDMA), LTE, BT, a GNSS, a WLAN, NFC, FM, an IR technology, and/or the like. The GNSS may include a GPS, a global navigation satellite system (global navigation satellite system, GLONASS), a beidou navigation satellite system (beidou navigation satellite system, BDS), a quasi-zenith satellite system (quasi-zenith satellite system, QZSS) and/or a satellite based augmentation system (satellite based augmentation system, SBAS).

The electronic device 100 implements a display function by using the GPU, the display screen 194, the application processor, and the like. The GPU is a microprocessor for image processing and connects the display screen 194 and the application processor. The GPU is configured to perform mathematical and geometric calculations, and is configured to render graphics. The processor 110 may include one or more GPUs that execute a program instruction to generate or change display information.

The display screen 194 is configured to display an image, a video, and the like. The display screen 194 includes a display panel. The display panel may be a liquid crystal display (liquid crystal display, LCD), a light-emitting diode (light emitting diode, LED) an organic light-emitting diode (organic light-emitting diode, OLED), an active-matrix organic light emitting diode (active-matrix organic light emitting diode, AMOLED), a flex light-emitting diode (flex light-emitting diode, FLED), a MiniLed, a MicroLed, a Micro-oLed, a quantum dot light emitting diode (quantum dot light emitting diode, QLED), and the like.

The electronic device 100 may implement a photographing function by using the ISP, the camera 193, the video codec, the GPU, the display screen 194, the application processor, and the like. The ISP is configured to process data fed back by the camera 193. The camera 193 is configured to capture a still image or video. The digital signal processor is configured to process a digital signal, and in addition to a digital image signal, the digital signal processor may further process another digital signal. The video encoder and decoder are configured to compress or decompress a digital video. The electronic device 100 may support one or more video codecs. In this way, the electronic device 100 may play or record videos in a plurality of encoding formats, for example, a moving picture experts group (moving picture experts group, MPEG) 1, an MPEG 2, an MPEG 3, and an MPEG 4.

Optionally, the camera 193 may further include 1 to N cameras. For example, the electronic device may include 2 front-facing cameras and 4 rear-facing cameras;

The NPU is a neural-network (neural-network, NN) computing processor that processes input information rapidly by referring to a structure of a biological neural network, for example, by referring to a transmission mode between human brain neurons, and can further perform self-learning continuously. The NPU may be used to implement an application such as intelligent cognition of the electronic device 100, for example, image recognition, facial recognition, voice recognition, and text understanding.

The external memory interface 120 may be configured to be connected to an external storage card such as a Micro SD card, to expand a storage capability of the electronic device 100. The external storage card communicates with the processor 110 by using the external memory interface 120, to implement a data storage function, for example, store files such as music and a video into the external storage card. The internal memory 121 may be configured to store computer-executable program code. The executable program code includes an instruction. The processor 110 runs the instructions stored in the internal memory 121, to implement various functional applications and data processing of the electronic device 100. For example, in this embodiment of this application, the processor 110 may execute instructions stored in the internal memory 121, and the internal memory 121 may include a program storage region and a data storage region. The program storage area may store an operating system, an application program required by at least one function (such as a voice playing function and an image playing function), and the like. The data storage region may store data (for example, audio data and an address book) and the like created when the electronic device 100 is used. In addition, the internal memory 121 may include a high-speed random access memory, and may further include a non-volatile memory, for example, at least one disk storage device, a flash memory device, or a universal flash storage (universal flash storage, UFS).

The electronic device 100 may implement an audio function such as music playing or recording by using the audio module 170, the speaker 170A, the telephone receiver 170B, the microphone 170C, the headset jack 170D, and the application, for example, music playing or recording.

The audio module 170 is configured to convert digital audio information into analog audio signal output, and is also configured to convert analog audio input into a digital audio signal. The audio module 170 may further be configured to encode and decode audio signals. The speaker 170A, also referred to as a "horn", is configured to convert an electrical audio signal into a sound signal. The telephone receiver 170B, also referred to as a "handset", is configured to convert an electrical audio signal into a sound signal. The microphone 170C, also referred to as a "voice tube" or a "mike", is configured to convert a sound signal into an electrical signal. The headset jack 170D is configured to be connected to a wired headset.

The button 190 includes a power button, a volume button, and the like. The button 190 may be a mechanical button, or a touch-type button. The electronic device 100 may receive button input, and generate button signal input related to user setting and function control of the electronic device 100. The motor 191 may generate a vibration prompt. The motor 191 may be configured for an incoming call vibration prompt and a touch vibration feedback. The indicator 192 may be an indicator light that may be configured to indicate a charging state and a power change, or may be configured to indicate a message, a missed call, a notification, and the like. The SIM card interface 195 is configured to connect a SIM card. The SIM card may be inserted into the SIM card interface 195 or plugged from the SIM card interface 195, to come into contact with or be separated from the electronic device 100. The electronic device 100 may support one or N SIM card interfaces, N being a positive integer greater than 1. The SIM card interface 195 can support a Nano SIM card, a Micro SIM card, a SIM card, and the like.

Methods in the following embodiments may all be implemented in the electronic device 100 having the foregoing hardware structure.

A software system of the electronic device 100 may use a layered architecture, an event-driven architecture, a microkernel architecture, a micro service architecture, or a cloud architecture. In this embodiment of the present invention, an Android system with a layered architecture is used as an example to illustrate a software structure of the electronic device 100. In the layered architecture, software is divided into several layers, and each layer has a clear role and task. Layers communicate with each other through an interface.

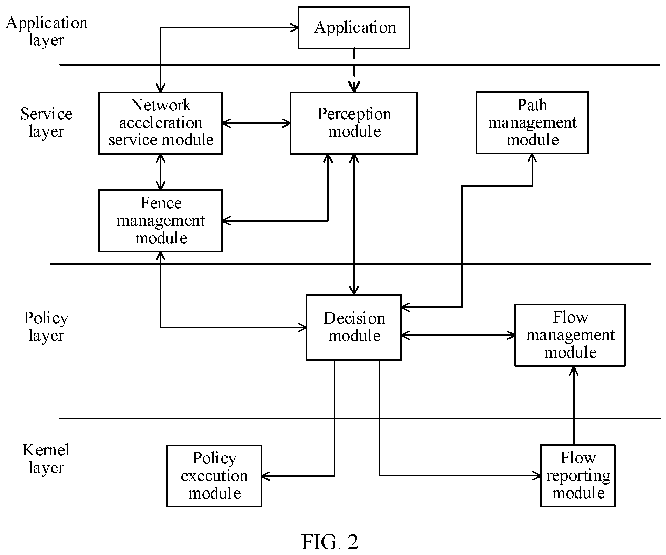

In some embodiments, as shown in FIG. 2, a technical architecture of the electronic device 100 includes: an application layer, a service layer, a policy layer, and a kernel layer. It should be understood that FIG. 2 shows only some layers and some components (modules) related to this embodiment of this application. In actual application, a layer and a component that are not shown in FIG. 2 may be further included. Certainly, only some of the components shown in FIG. 2 may alternatively be included.

There are various applications such as a video application or game application at the application layer.

There are a network acceleration service module, a perception module, a path management module, and a fence management module at the service layer.

The network acceleration service module is a channel for the application program to interact with the perception module. The network acceleration service module can forward a message (for example, a registration request) for the application program and the perception module based on a Binder mechanism. Binder is an interprocess communication mechanism that enables communication between different processes.

The fence management module may include sub-modules such as elevator perception, user state identification, fence data collection, a fence database, fence data generation, and fence data prediction (not shown in FIG. 2). The elevator perception sub-module is configured to perceive whether a user gets into or off an elevator. The elevator perception sub-module may notify the fence data collection sub-module of an event of the user getting into or off the elevator. The fence data collection sub-module is configured to collect information of Wi-Fi to which the electronic device is currently connected and Wi-Fi list information that can be currently scanned. The fence database is used to store data collected by the fence data collection sub-module. The fence data generation sub-module is configured to generate fence data of at least one geofence based on the data collected by the fence data. Fence data of each geofence may correspond to (a BSSID of) a connected Wi-Fi network when the user gets into or off the elevator, to be specific, the geofence to which the elevator corresponds may be identified with (the BSSID of) the connected Wi-Fi network when the user gets into or off the elevator. The user state identification sub-module is configured to identify a change in a motion state and a motion stop state of the user, further triggering the fence data prediction sub-module to predict whether the user waits to get into the elevator. The fence data prediction sub-module is configured to predict whether the user arrives at an elevator entrance and whether to get into the elevator based on the Wi-Fi network to which the electronic device is currently connected and geofence data. When the fence data prediction sub-module predicts that the user arrives at the elevator entrance or gets into the target elevator, and reports an event of the user arrives at the elevator entrance or gets into the target elevator to the perception module.

The perception module can detect various events at an upper layer application. For example, the perception module may detect opening and exiting of an application, detect an application that is currently switched to a foreground/background, and detect installation and uninstallation of an application. When the perception module detects that the application is opened or that the application is switched to the foreground, the perception module notifies a lower layer module (a decision module) to enable a function of monitoring a data flow.

The path management module may be configured to probe a state (open or closed) of a Wi-Fi network and a cellular network supported by the electronic device. For example, if a wireless network interface card 1 of a 2.4 GHz frequency band and a wireless network interface card 2 of a 5.0 GHz frequency band are disposed in the electronic device, the path management module may detect whether a wireless network of the 2.4 GHz frequency band is in an open or closed state; or detect a wireless network of the 5.0 GHz frequency band is in an open or closed state. If a data service network interface card 1 of an operator A and a data service network interface card 2 of an operator B are disposed in the electronic device, the path management module may probe whether data services of the operator A is in an open or closed state; or probe whether data services of the operator B are in an open or closed state.

The path management module is also configured to assess quality of a network channel. For example, the path management module may access quality of a Wi-Fi network of a 2.4 GHz frequency band, and may further access quality of a Wi-Fi network of a 5.0 GHz frequency band. The path management module may also access quality of a cellular network of an operator A, and may further access quality of a cellular network of an operator B.

The path management module may also store paths of different network channels, for example, may store a path of a network channel (for example, a primary network channel) currently used by the application and a path of an alternate network channel. The path management module may also be configured to update selection of a network channel based on a policy change of the decision module, trigger a probe into network channel quality, and dynamically select an optimal channel. The path management module may enable the selected optimal channel, to be specific, convert the network channel from a sleep state to an awake state, and a network channel in the awake state can be directly used. The path management module may close a non-optimal channel, to be specific, convert a network channel from the awake state to a dormant state, and a network channel in the dormant state is temporarily unable to be used.

A flow management module and the decision module are disposed at the policy layer.

The flow management module is configured to collect statistics on a data flow reported by the kernel layer and access network quality of each data flow.

The decision module may perform corresponding processing based on whether the user gets into or off the elevator. For example, when it is determined that the user gets into the elevator, a system acceleration policy is executed to request a new network channel for tuning (for example, services of the application may be switched from the Wi-Fi network to the cellular network). When it is determined that the user gets off the elevator, the services of the application are restored to the Wi-Fi network (to be specific, the services of the application is switched from the cellular network back to the Wi-Fi network).

There are a policy execution module and a flow reporting module at the kernel layer. The flow reporting module is configured to collect data flow information, and report the collected data flow information. The policy execution module is configured to perform switching of network channels.

In another embodiment of this application, one module (component) in the foregoing embodiment may be split into two or more modules, or two or more modules at a same level may be combined into a same module.

For example, the path management module at the service layer may be split into a path probing module and a path control module. The path probing module may be configured to probe a state and quality of a Wi-Fi network and a cellular network supported by the electronic device. The path control module may be configured to update selection of a network channel based on a policy change of the decision module, trigger a probe into network channel quality, and dynamically select an optimal channel.

For ease of understanding, the network acceleration method provided in embodiments of this application is described below in detail with reference to the accompanying drawings.

Before an operating system of an electronic device executes the network acceleration method, a user needs to enable a network acceleration function in advance. A UI interface and user operation for the user to enable the network acceleration function in advance are described below.

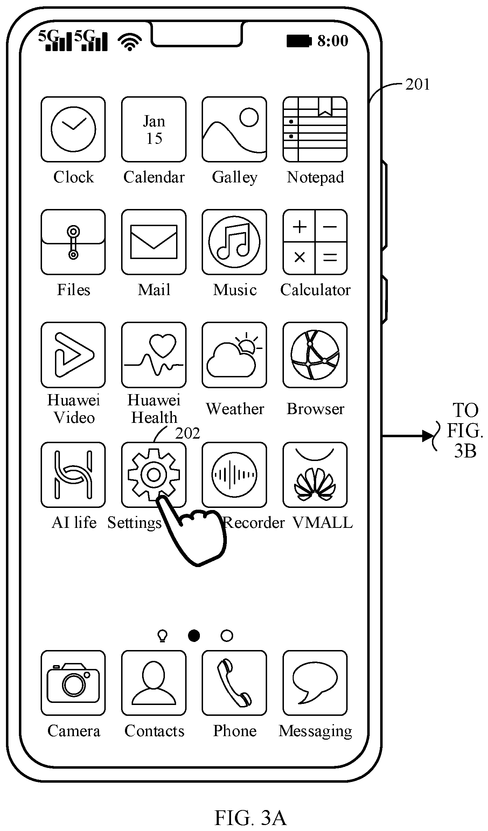

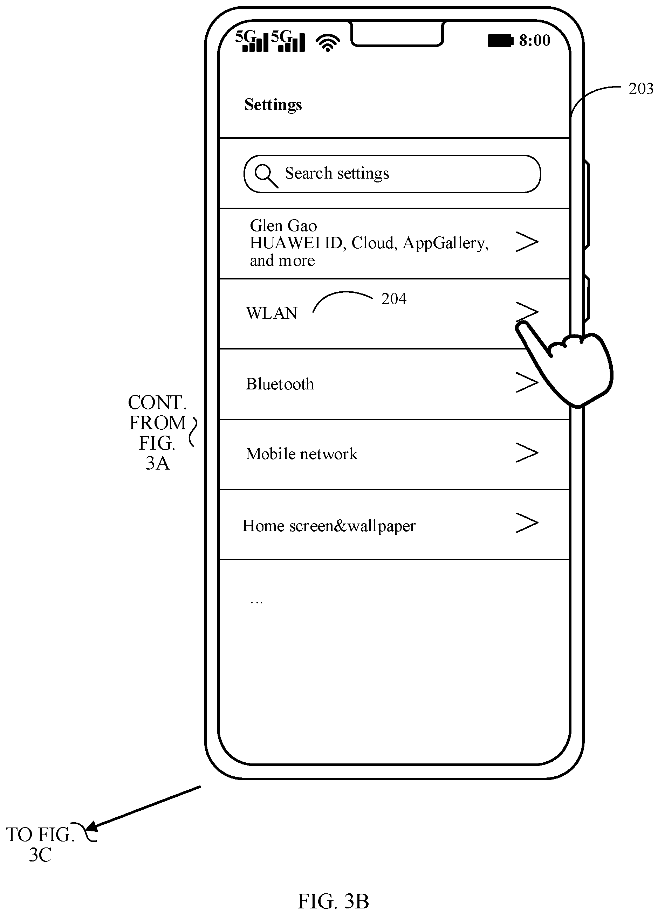

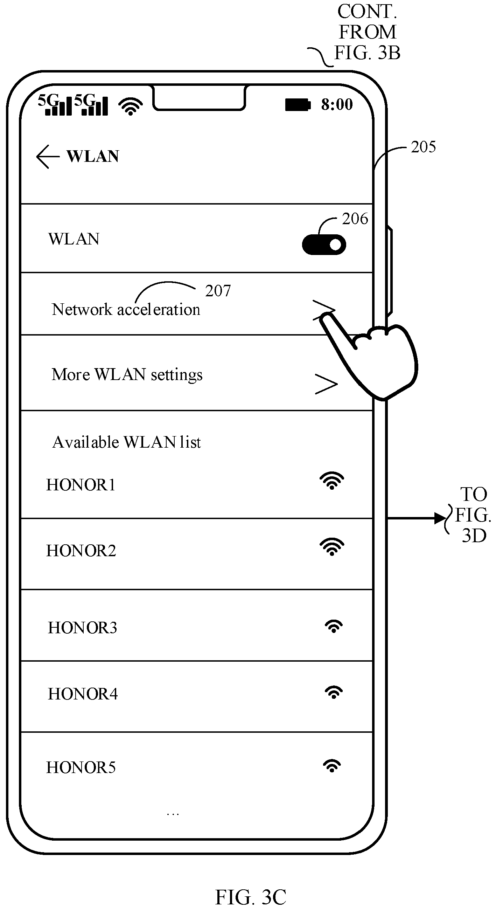

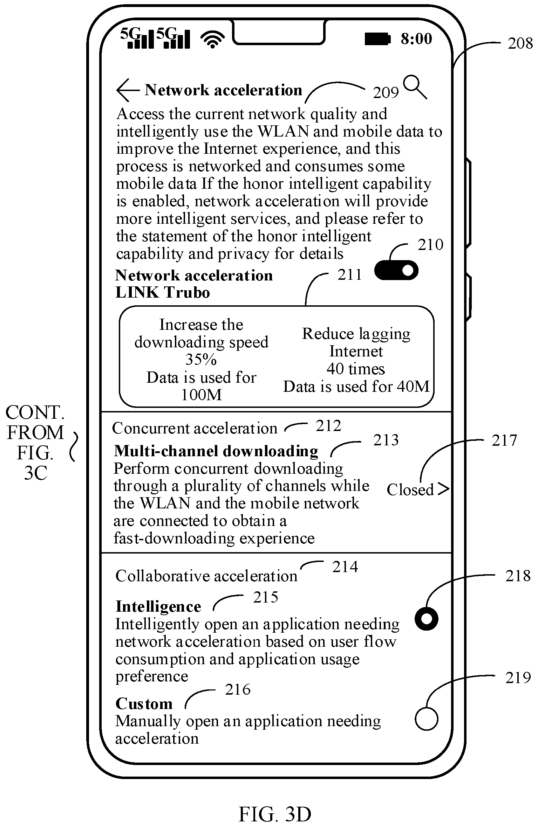

For example, as shown in FIG. 3A, a cell phone displays a desktop 201. In response to an operation of a user tapping an icon 202 of a setting application on the desktop 201, as shown in FIG. 3B, the cell phone may display a setting interface 203. The setting interface 203 may include a WLAN option 204, and may also include a search box, as well as function options such as a personal account number, Bluetooth, Mobile network, Desktop, and Wallpaper. In response to an operation of the user tapping a control corresponding to the WLAN option 204, as shown in FIG. 3C, the cell phone may display a WLAN interface 205. The WLAN interface 205 may include a WLAN switch 206. The WLAN switch 206 is in an open state, indicating that the cell phone can connect to a WLAN for Internet access. The WLAN interface 205 may also include a network acceleration option 207, as well as more WLAN setting options and an available WLAN list. The available WLAN list may include names (for example, HONOR1, HONOR2, or HONOR3) and signal strength identifiers of a plurality of WLAN networks that the cell phone currently scans. In response to an operation of the user tapping a control corresponding to the network acceleration option 207, as shown in FIG. 3D, the cell phone can display a network acceleration interface 208. The network acceleration interface 208 may include a written description 209 of a network acceleration function. The written description 209 indicates that a role of the network acceleration function is "Access the current network quality, intelligently use the WLAN and mobile data to improve the Internet experience, and this process is networked and consumes some mobile data." Optionally, if the user enables an honor intelligence capability, network acceleration will provide more intelligent services. The user may tap a link "Statement of the honor intelligent capability and privacy" to view a description of the honor intelligent capability. An operating system can collect a user's habit of using the cell phone after the honor intelligent capability is enabled, and provide the user with personalized services based on the user's habit. The network acceleration interface 208 may also include a switch 210 corresponding to network acceleration (LINK Trubo). The switch 210 is in an open state, which indicates that the user agrees to enable the network acceleration function, so that the cell phone can access current network quality and intelligently use a WLAN and mobile data to improve an Internet experience. Certainly, the user may choose to close the switch 210, that is, to disable the network acceleration function. A text box 211 may be displayed below the switch 210. A word in the text box 211 is used to illustrate to the user an effect of the network acceleration function and data usage. For example, after the network acceleration function is enabled, a downloading speed is increased by 35%, and data is used for 100 M; and lagging Internet is reduced for 40 times, and data is used for 40 M. It should be noted that, the network acceleration function may include a concurrent acceleration function 212 and a collaborative acceleration function 214. The concurrent acceleration function 212 includes a multi-channel downloading mode 213. The user can enter through a control 217 a setting interface in the multi-channel downloading mode to open or close the multi-channel downloading mode. When the multi-channel downloading mode 213 is opened, an electronic device can perform concurrent downloading through a plurality of network channels while connecting the WLAN and the mobile network, to obtain a fast-downloading experience. The multi-channel downloading mode 213 in FIG. 3D is in a closed state. The collaborative acceleration function 214 includes an intelligent mode 215 and a custom mode 216. In the intelligent mode 215, an application needing network acceleration may be intelligently opened based on user data consumption and application usage preference. The user may open or close the intelligent mode through a control 218. The control 218 in FIG. 3D is in a selected state, with the intelligent mode opened. In the custom mode 216, the user may manually open the application needing acceleration (network acceleration). The user may open or close the custom mode through a control 219. When the control 219 in FIG. 3D is in an unselected state, the custom mode is closed. When the user selects the intelligent mode 215 or the custom mode 216 of the collaborative acceleration function 214, a corresponding application program (an application that needs the network acceleration and that is intelligently opened in the intelligent mode 215, or the application that needs the network acceleration that is manually selected by the user in the custom mode 216) runs in the foreground. If lagging Internet occurs, the electronic device can switch a lagging network channel to a network channel having better communication quality, thereby obtaining a better Internet experience.

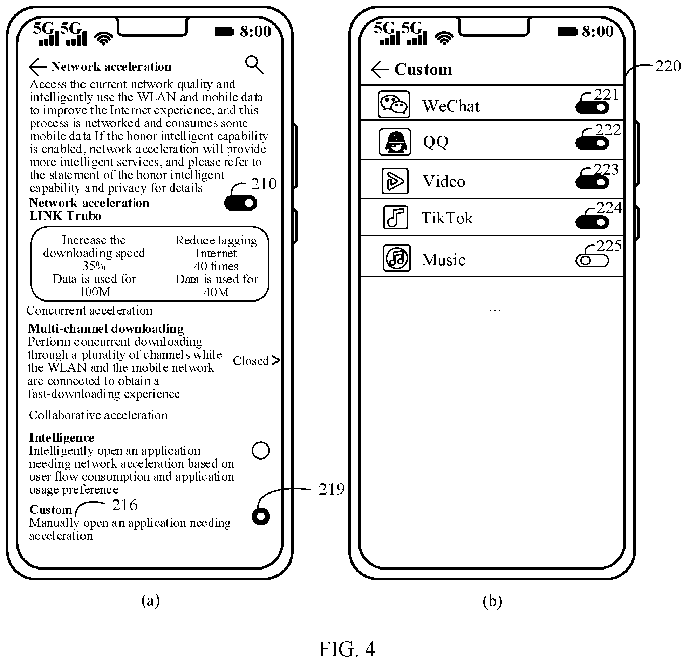

As shown in (a) in FIG. 4, in response to an operation of the user selecting the control 219 to open the custom mode 216, as shown in (b) in FIG. 4, the cell phone may display corresponding switches and information (an icon or a name) of various application programs installed in the cell phone. For example, the cell phone may display a switch 221 corresponding to WeChat^{®}, a switch 222 corresponding to QQ^{®}, a switch 223 corresponding to a video application, a switch 224 corresponding to TikTok^{®}, and a switch 225 corresponding to a music application. The user can manually select an application program needing acceleration based on a need of the user. For example, the user may open the switch 221 corresponding to WeChat^{®}, the switch 222 corresponding to QQ^{®}, the switch 223 corresponding to the video application, and the switch 224 corresponding to the TikTok^{®}. It indicates that the cell phone needs to enable the network acceleration when the user uses WeChat^{®}, QQ^{®}, the video application, and TikTok^{®} to ensure a usage experience of the user.

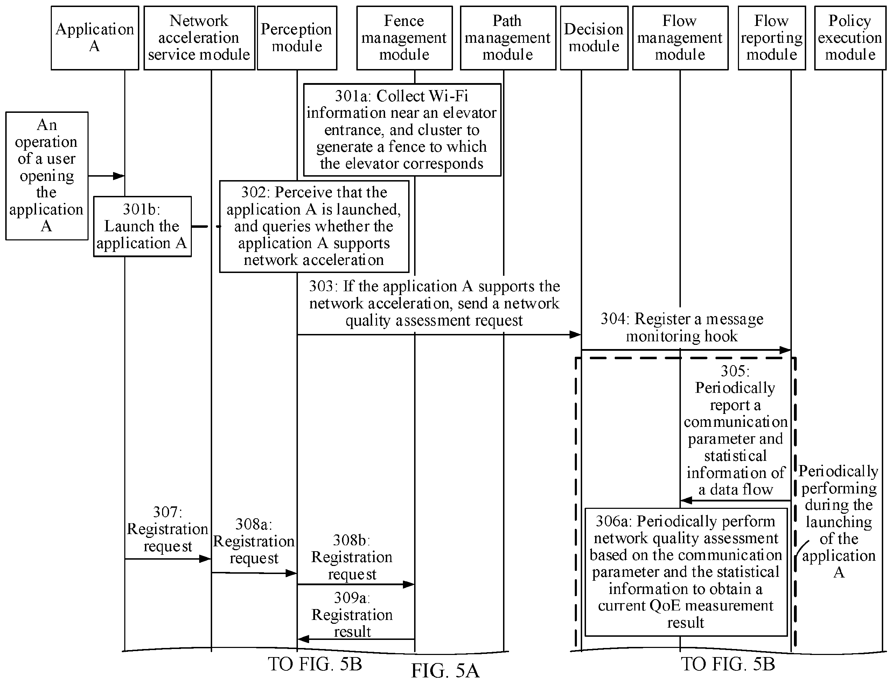

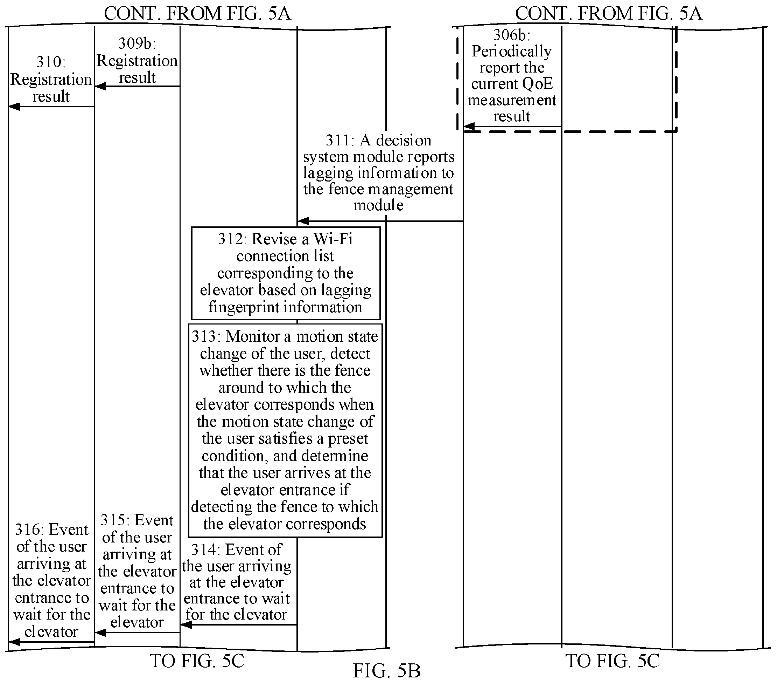

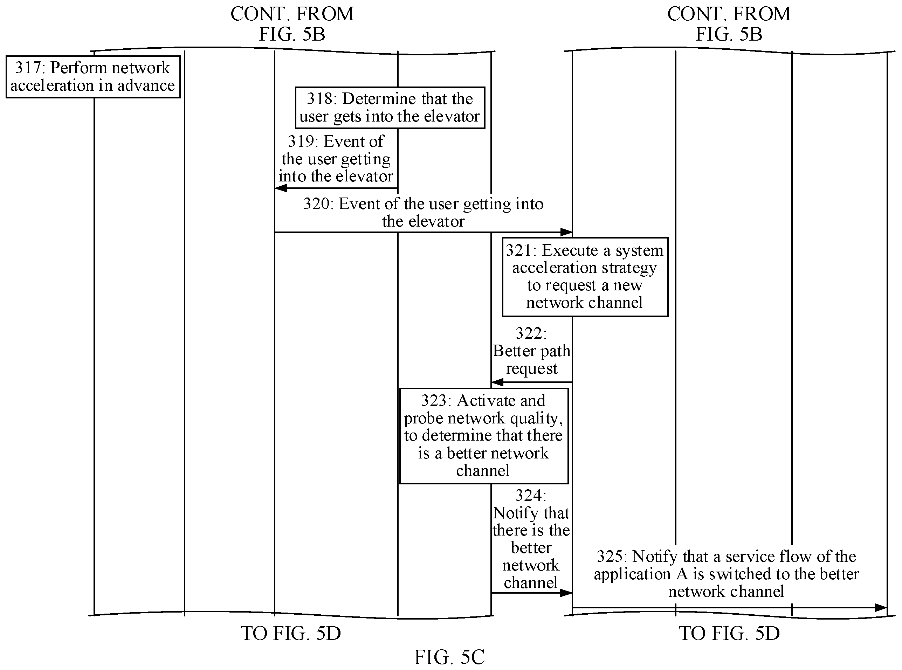

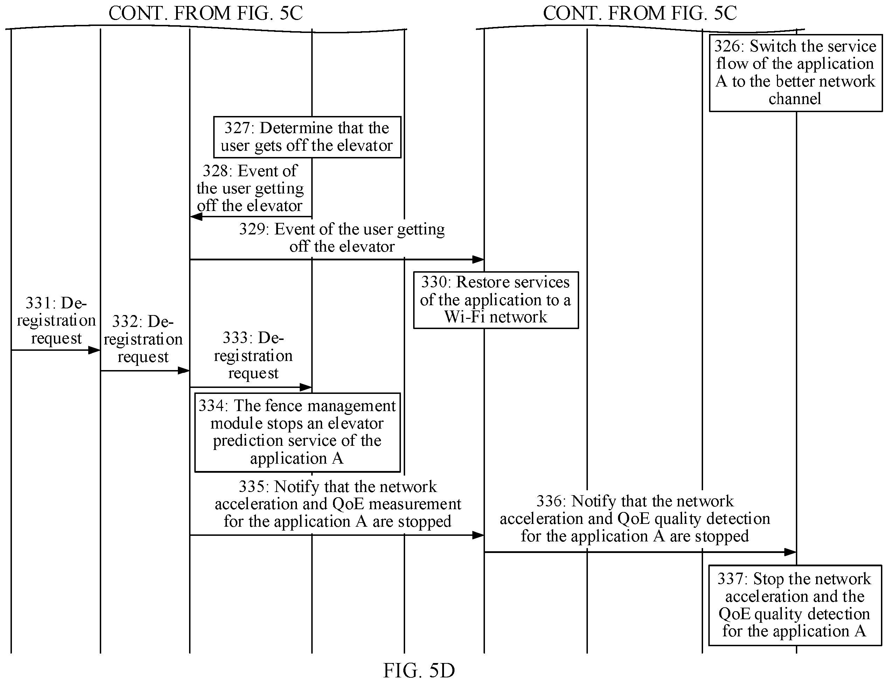

FIG. 5A to FIG. 5D are a timing diagram of a network acceleration method implemented based on each module shown in FIG. 2 provided in an embodiment of this application, and includes two parts. A first part is a process of generating a geofence corresponding to an elevator, and includes step 301a; and a second part is a prediction of an event of a user arriving at, getting into or off the elevator and a corresponding network acceleration process, and includes step 301b to step 337.

301a: A fence management module collects Wi-Fi information near an elevator entrance, and clusters to generate a fence to which the elevator corresponds.

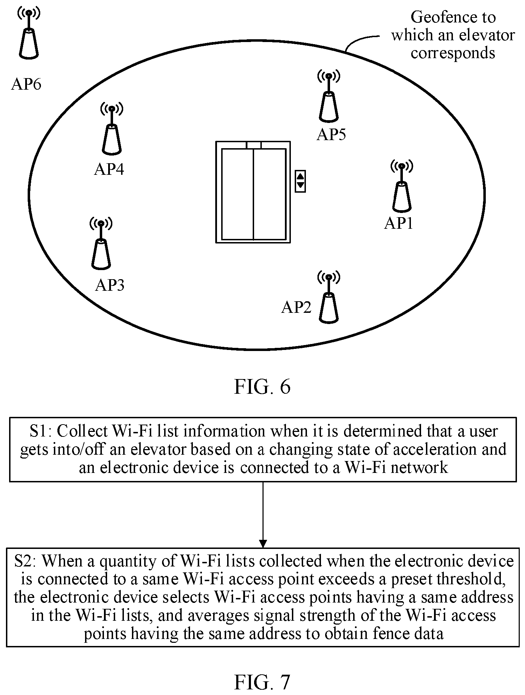

It can be understood that the fence is a geographic concept that can refer to a bounded geographic area. For example, refer to FIG. 6. FIG. 6 is a schematic diagram of a fence to which an elevator corresponds. The fence to which the elevator corresponds covers an area around the elevator. The elevator may refer to an elevator frequently used by the user. The elevator frequently used by the user may include an elevator near a household (home) of the user, an elevator near an office of the user, or an elevator near a restaurant and a supermarket that the user frequents.

It can be understood that there are generally a plurality of fixed Wi-Fi access points around the elevator. For example, for a residential building with one elevator for a plurality of households, there may be Wi-Fi access points set in a plurality of households near an elevator entrance on one floor. BSSIDs of the Wi-Fi access points set in the plurality of households are different. For another example, for an office building, there may be a plurality of Wi-Fi access points near an elevator entrance on one floor. BSSIDs of the plurality of Wi-Fi access points are different (for example, a company has a large area and installs the plurality of Wi-Fi access points (wireless access points (wireless access point, AP) or wireless routers), and the company may set SSIDs of the plurality of Wi-Fi access points to be the same, but the BSSIDs of the plurality of Wi-Fi access points to be different). Refer to FIG. 6. The fence to which the elevator corresponds includes Wi-Fi access points of AP1, AP2, AP3, AP4, and AP5. The Wi-Fi access points are Wi-Fi access points that an electronic device can scan when the user gets into or off the elevator.

The electronic device may collect Wi-Fi information when the user gets into or off the elevator (getting into and/or off the elevator). The electronic device may determine whether the user gets into or off the elevator based on data of a sensor such as an accelerometer. For example, if the accelerometer detects that acceleration of the electronic device starts increasing from zero and then decreases to zero, it is determined that the user is in a scenario of taking the elevator and about to get off the elevator.

In some embodiments, the Wi-Fi information collected by the electronic device when the user gets into or off the elevator may include Wi-Fi information collected by the electronic device within preset time (for example, 10 to 30 seconds) before getting into or after getting off the elevator. To be specific, the electronic device may cache a BSSID and signal strength of a Wi-Fi access point scanned within 10 to 30 seconds before the user gets into or after gets off the elevator. The Wi-Fi information collected by the electronic device includes an address and signal strength information of a Wi-Fi access point to which the electronic device is connected before the user gets into or after gets off the elevator, and Wi-Fi list information scanned by the electronic device. The Wi-Fi list information scanned by the electronic device may include an address of at least one Wi-Fi access point scanned (searched) by the electronic device at the elevator entrance. Optionally, a Wi-Fi list may further include signal strength of the at least one Wi-Fi access point searched by the electronic device at the elevator entrance. For example, the address of the Wi-Fi access point may be a BSSID. Signal strength of a Wi-Fi network may be (received signal strength indication, RSSI). Optionally, the Wi-Fi list may also include power-on time of the electronic device and center frequency of a Wi-Fi signal. This is not limited in this application.

In order to more accurately represent an actual geographic location of a target elevator, this embodiment of this application may generate fence data of the geofence by collecting the Wi-Fi list information for a plurality of times, as shown in an embodiment in FIG. 7. As shown in FIG. 7, at least one piece of fence data stored by the electronic device is obtained in advance in the following steps.

S1: Collect Wi-Fi list information when it is determined that a user gets into/off an elevator based on a changing state of acceleration and the electronic device is connected to a Wi-Fi network.

It may be understood that the electronic device may collect the Wi-Fi list information each time the user gets into/off the elevator, and the electronic device may collect a plurality of pieces of Wi-Fi list information over a period of time (for example, one week, two weeks, or one month).

In one possible design, geofences corresponding to different elevators may be distinguished by using a BSSID of a connected Wi-Fi network when the user gets into or off the elevator as an identifier of a geofence to which the elevator corresponds. For example, in an application scenario where the user takes the elevator up and down a floor in a residence, a BSSID of a Wi-Fi network to which the electronic device is connected in the residence may be used as an identifier of a geofence of a target elevator in the residence. For another example, in an application scenario where the user takes the elevator up and down a floor at an office, a BSSID of a connected Wi-Fi network at the office may be used as an identifier of a geofence of a target elevator corresponding to the office.

S2: When a quantity of Wi-Fi lists collected when the electronic device is connected to a same Wi-Fi access point exceeds a preset threshold, the electronic device selects Wi-Fi access points having a same address in the Wi-Fi lists (all Wi-Fi lists collected when the electronic device is connected to the same Wi-Fi access point), and obtains the fence data of the geofence to which the elevator corresponds based on information of the Wi-Fi access points having the same address.

Optionally, the preset threshold may be 2, 3, 4 or more. This is not limited in this embodiment of this application.

It may be understood that the Wi-Fi list collected when the electronic device is connected to the same Wi-Fi access point may refer to Wi-Fi list information collected when the user gets into or off the elevator at different time, when the electronic device is connected to the same Wi-Fi access point (for example, a Wi-Fi access point in a residence).

An example is used in which a BSSID represents the address of the Wi-Fi access point, and an RSSI represents the signal strength of the Wi-Fi network to illustrate a record of the Wi-Fi list collected when the electronic device is connected to the same Wi-Fi access point.

Refer to Table 1. Wi-Fi list information recorded by the electronic device each time getting into or off the elevator may include a BSSID and an RSSI of a Wi-Fi access point to which the electronic device is connected when the user gets into or off the elevator, and a BSSID and an RSSI of a Wi-Fi access point currently searched by the electronic device. Optionally, the Wi-Fi list information recorded by the electronic device each time getting into or off the elevator may also include a timestamp of the user getting into or off the elevator.

**Table 1**

| First record | | | | Second record | | |
|---|---|---|---|---|---|---|
| | BSSID | RSSI | Timestamp (timestamp) | BSSID | RSSI | Timestamp (timestamp) |
| Connected Wi-Fi access point | 6c: 16:32:17:3c:95 | -50 | 1623402342 | 6c: 16:32:17:3c:95 | -48 | 1623402342 |
| Searched Wi-Fi access point | 6c:16:32:17:3c:51 | -60 | | 6c:16:32:17:3c:51 | -62 | |
| | 6c:17:32:27:2c:92 | -70 | | 6c:17:32:27:2c:92 | -72 | |
| | 6c:17:32:27:2c:72 | -78 | | 6c:17:32:27:2c:78 | -74 | |

For example, a preset threshold is 2. When a quantity of records of the Wi-Fi list exceeds 2, the electronic device selects Wi-Fi access points having a same address in two Wi-Fi lists. For example, in Table 1, BSSIDs having a same address between the first record and the second record are 6c:16:32:17:3c:95, 6c:16:32:17:3c:51, and 6c:17:32:27:2c:92, and thus addresses of Wi-Fi access points in generated fence data are respectively 6c:16:32:17:3c:95, 6c:16:32:17:3c:51, and 6c:17:32:27:2c:92, as shown in Table 2.

Further, signal strength of the Wi-Fi access points having the same address may be averaged to generate the fence data. Refer to Table 1. The Wi-Fi access point having the BSSID of 6c:16:32:17:3c:95 has corresponding RSSIs of -50 dBm and -48 dBm, separately, and an average of -50 dBm and -48 dBm is -49 dBm. Refer to Table 2. The fence data includes an RSSI of -49 dBm of the Wi-Fi access point having the BSSID of 6c:16:32:17:3c:95. Similarly, an RSSI of the Wi-Fi access point having the BSSID of 6c:16:32:17:3c:51 is -61 dBm, and an RSSI of the Wi-Fi access point having the BSSID of 6c:17:32:27:2c:92 is -71 dBm.

**Table 2**

| Fence data corresponding to an elevator | | |
|---|---|---|
| | BSSID | RSSI |
| Connected Wi-Fi access point | 6c:16:32:17:3c:95 | -50 |
| Searched Wi-Fi access point | 6c:16:32:17:3c:51 | -60 |
| | 6c:17:32:27:2c:92 | -70 |

This embodiment of this application provides a method of generating the fence data of the elevator (for example, an elevator in a residence) by taking an intersection of records of the Wi-Fi list information collected when a user gets into or off the same elevator (for example, the elevator in the residence) at different time and calculating average signal strength of the network, so that the generated fence data is closer to an actual geographical location of the elevator (for example, the elevator in the residence), thereby improving accuracy of the electronic device predicting whether the user waits to get into the elevator.

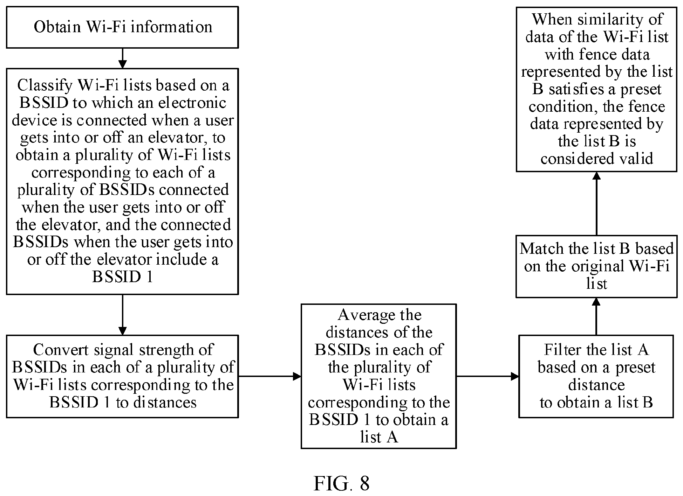

In another possible design, as shown in FIG. 8, a process of the electronic device generating the fence data (namely, the fence data to which the elevator corresponds) of the geofence to which the elevator corresponds may include: The electronic device obtains Wi-Fi information collected when the user gets into or off the elevator; and Wi-Fi lists (namely, Wi-Fi lists scanned by the electronic device when getting into or off the elevator) is classified based on a BSSID to which the electronic device is connected when the user gets into or off the elevator (namely, a BSSID of a Wi-Fi access point to which the electronic device is connected when getting into or off the elevator), to obtain a plurality of Wi-Fi lists corresponding to each of a plurality of BSSIDs connected when the user gets into or off the elevator. Signal strength of each Wi-Fi access point in each of the plurality of Wi-Fi lists collected when the electronic device is connected to the same BSSID may be converted to distances, and the distances corresponding to Wi-Fi access points having the same address in the plurality of Wi-Fi lists may be averaged to obtain a list A. The plurality of Wi-Fi lists collected when the electronic device is connected to the same BSSID may be collected over a recent period of time (for example, last 7 days or last 14 days). A Wi-Fi access point in the list A is filtered (culled) based on a preset distance to obtain a list B. The list B is fence data. In other words, when a distance corresponding to the Wi-Fi access point in the list A is greater than the preset distance, the Wi-Fi access point is discarded, to obtain the list B in which a distance corresponding to each Wi-Fi access point is not greater than (less than or equal to) the preset distance. In this way, extent of a subsequently generated fence may be enabled to be more accurate. The collected Wi-Fi list may be used to match the list B, that is, to perform validity check on the list B. When similarity of data of the Wi-Fi list with the fence data represented by the list B (including similarity of a BSSID with a distance) satisfies a preset condition (for example, the similarity reaches 80%), the fence data represented by the list B is considered valid, that is, the fence data of the elevator can be represented by using the list B.

Based on the above method, the electronic device may create a fence to which at least one elevator corresponds. For example, the electronic device may create a fence corresponding to an elevator near a residence (home) of the user, a fence corresponding to an elevator near an office of the user, or a fence corresponding to an elevator near a dining room or a supermarket that the user frequents.

In some embodiments, the electronic device may send the collected Wi-Fi list information to a server (a cloud server). The server generates the fence data based on the Wi-Fi list information collected by the electronic device. A process of generating the fence data by the server may refer to the above process of generating the fence data by the electronic device. The electronic device may receive the fence data from the server and store the fence data.

In one possible design, the server may receive Wi-Fi list information reported by a plurality of electronic devices at a same elevator, select Wi-Fi access points having a same address in Wi-Fi lists (all Wi-Fi lists collected by the plurality of electronic devices connecting a same Wi-Fi access point), and generate, based on information of the Wi-Fi access points having the same address, fence data of a geofence to which the elevator corresponds, so that the generated fence data is more accurate.

301 b: Launch an application A in response to an operation of the user opening the application A.

The application A is an application program at an application layer and may be, for example, a video application. The application A is launched in response to the operation of the user opening the application A, and the electronic device may display a related interface of the application A. At this point, the application A is a foreground application, to be specific, program code of the application A runs in a CPU.

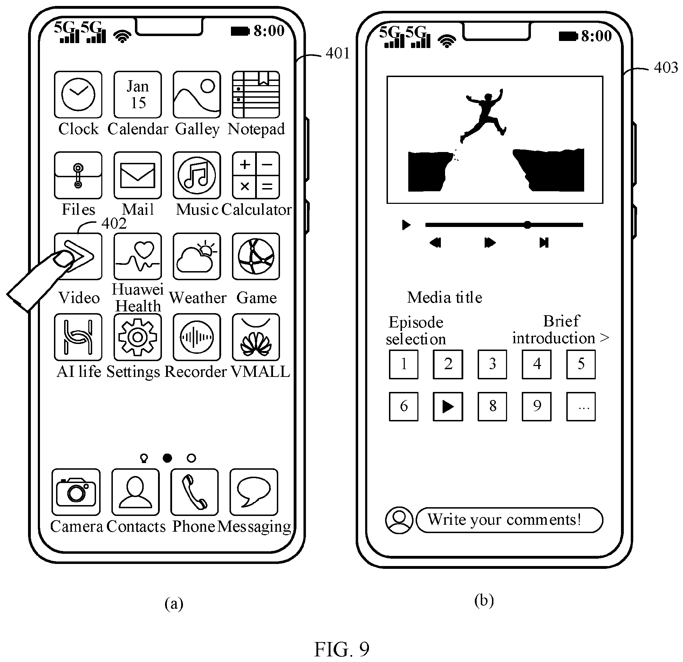

An example is used in which the application A is a game application. As shown in (a) in FIG. 9, in response to an operation of the user tapping an icon 402 of the game application on a desktop 401, the video application is launched, and a cell phone may display a main interface of the video application. In response to the user selecting one video to play at the main interface of the video application, as shown in (b) in FIG. 9, the cell phone may display a video playing interface 403. The video playing interface 403 may include a display window of a currently playing video, and controls such as a media title and an episode selection button.

Alternatively, step 301b may be that the application A switches from a background to a foreground, and at this point the application A is still the foreground application.

302: A perception module perceives that the application A is launched, and queries whether the application A supports network acceleration.

For example, the perception module may monitor the current foreground application (for example, the application A) through functions such as RunningProcess, ActivityLifecycleCallbacks, and UsageStatsManager, and obtain a foreground application identifier. Alternatively, if a terminal device is an Android system, the current foreground application can be monitored through an unobstructed function of the Android and the foreground application identifier can be obtained. Alternatively, if the terminal device is a Linux system, process process information stored in a /proc directory by the Linux system kernel can be read to monitor the current foreground application, and the foreground application identifier can be obtained. A specific determining process may refer to the prior art, and details are not described herein again. An application identifier is used to uniquely identify one application, and the identifier and a package name of the application may be in a one-to-one correspondence, or the package name of the application may be used.

An application configuration library may be included in the perception module. The application configuration library stores information of whether a plurality of application programs support network acceleration, and the plurality of application programs include the application A. As shown in Table 3, information of whether a part of application programs support network acceleration is exemplarily shown.

**Table 3**

| Application program | Whether network acceleration is supported |
|---|---|
| Arena Valor^{®} | Yes |
| Genshin^{®} | Yes |
| WeChat^{®} | Yes |
| QQ^{®} | Yes |
| YOUKU^{®} | Yes |
| Taobao^{®} | No |
| TikTok^{®} | No |
| Toutiao^{®} | No |
| ... | ... |

Alternatively, the application configuration library may only store information of an application program supporting network acceleration. As shown in Table 4, information of a part of application programs supporting network acceleration is exemplarily shown.

**Table 4**

| Application program | Whether network acceleration is supported |
|---|---|
| Arena Valor^{®} | Yes |
| Genshin^{®} | Yes |
| WeChat^{®} | Yes |
| QQ^{®} | Yes |

In actual application, the application configuration library may further store a plurality of application identifiers, and a different character is used for each application identifier to represent whether an application represented by the application identifier supports network acceleration. For example, "1" may be used to represent that the network acceleration is supported, and "0" is used to represent that the network acceleration is not supported. Other manners of determining whether an application supports network acceleration are not illustrated one by one.

In one possible implementation, as shown in FIG. 3D, if the user selects the intelligent mode 215 of the collaborative acceleration function 214, in a plurality of application programs in the application configuration library, an application program needing the network acceleration may be intelligently determined based on user data consumption and application usage preference.

In another possible implementation, as shown in (a) in FIG. 4, if the user selects the custom mode 216 of the collaborative acceleration function, in a plurality of applications in the application configuration library, an application needing the network acceleration may be determined based on manual setting of the user. For example, as shown in (b) in FIG. 4, if the user opens a switch 221 corresponding to WeChat^{®}, a switch 222 corresponding to QQ^{®}, a switch 223 corresponding to a video application, and a switch 224 corresponding to TikTok^{®}, the plurality of application programs in the application configuration library may include WeChat^{®}, QQ^{®}, the video application, and TikTok^{®}.

303: If the perception module determined that the application A supports the network acceleration, the perception module sends a network quality assessment request to a decision module.

If the perception module determines that the application A supports the network acceleration by querying the application configuration library, the perception module may send the network quality assessment request to the decision module. After receiving the network quality assessment request, the decision module may perform step 304.

The network quality assessment request is used to request the decision module to perform network quality assessment. The network quality assessment request may include an application identifier, configuration information of the application, and a criterion for the network quality assessment request. The configuration information of the application refers to a message feature when the application performs services, and the message feature is a header feature of a data packet when the application transmits a data flow.

Alternatively, the perception module perceives that the application A is switched to the foreground and may notify the decision module, and the decision module may query the application configuration library to determine whether the application A supports the network acceleration. If the decision module determines that the application A supports the network acceleration, step 304 can be performed.

304: The decision module registers a message monitoring hook with a flow reporting module at a kernel layer.

The message monitoring hook may periodically probe a path of a network channel currently used by the application A and monitor a communication parameter and statistical information of a data flow transmitted through the network channel used by the application A.

The application A may generate one or more data flows when implementing a specific function. If generation of the plurality of data flows is detected, a communication parameter and statistical information of each data flow of the application A may be periodically detected.

The following describes in detail how the message monitoring hook monitors the communication parameter and statistical information of the data flow of the application A and sends the monitored communication parameter and statistical information of the data flow to the flow management module.

There is a Netfilter component (a hook function management component) in a system of the electronic device, and a data flow of an application (for example, the application A) corresponding to a specific application identifier can be obtained by using the component. The flow reporting module may obtain the message of the data flow of the application A by invoking the Netfilter component. In a specific implementation, information reported by the flow reporting module to the flow management module includes a message of the data flow of the application A and some communication parameters and statistical information of a message of the data flow of the application A.

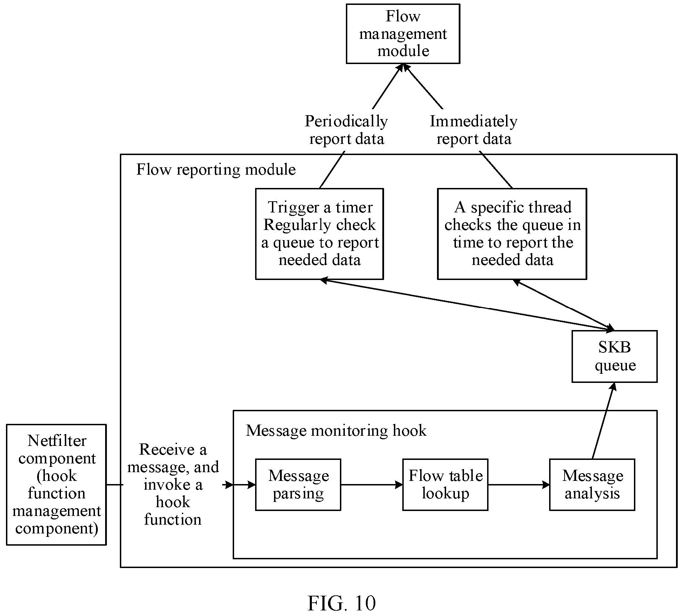

Refer to FIG. 10. The flow reporting module may pre-register a message monitoring hook (for example, an nf_hook hook function). After the flow reporting module invokes the Netfilter component, the Netfilter component reports the message of the data flow of the application A. After receiving the message that is of the data flow and that is reported by the Netfilter component, the flow reporting module invokes the pre-registered nf_hook hook function.

This nf_hook hook function is used to perform the following operations on the received message of the data flow: message parsing, flow table lookup, and message analysis.

During the message parsing, whether an application identifier exists in the message and four tuples (or five tuples) of the message may be checked, to obtain a parsing result. If the application identifier exists, an application program corresponding to the message may be determined. The four tuples may include: a source IP, a destination IP, a source port, and a destination port. The five tuples include: a source IP, a destination IP, a source port, a destination port, and a protocol number. In addition, the message (a data packet) also carries a header feature. Parameters such as the four tuples (or the five tuples) of the message of the data flow and the header feature of the message may be collectively referred to as the communication parameter of the data flow.

After the message parsing is performed, a flow table is looked up based on the parsing result, and statistical information of the flow table is updated. The flow table stores identifier information of the data flow in each application, and a total quantity of messages, a quantity of transceived bytes (including a quantity of received bytes and a quantity of sent bytes), a quantity of erroneous packets of each data flow. Further, whether there is no downlink response is determined based on the total quantity of messages, for example, if the total quantity of received messages within two consecutive periods are the same, it is determined that there is no downlink response. A transmission rate is determined based on the total quantity of transceived bytes, for example, a ratio of a difference between byte quantities received in a previous period and a current period to the period is a downlink rate of the current period. A packet loss situation may be determined based on a sequence number carried in the message, for example, a packet loss rate (a loss tolerance or packet loss rate) may be a ratio of a quantity of missing sequence numbers to a quantity of existing sequence numbers. Certainly, the foregoing manner of determining the parameters is merely used as an example. In actual application, the foregoing parameters may alternatively be determined in another manner. Information such as a total quantity of messages, a quantity of erroneous packets, a packet loss rate, a quantity of transceived bytes, a rate (an upstream rate and a downstream rate) of the data flow may be collectively referred to as the statistical information of the data flow. In actual application, the statistical information of each flow may also include other information, such as flow distribution information of the data flow over time, and latency information of the message of the data flow.

Certainly, if identifier information or related statistical information of a specific data flow does not exist in the flow table, an identifier and related statistical information of the data flow may be added to the flow table.

After the flow table lookup is performed and information of the flow table is updated, the message may be analyzed. For example, the message is filtered to obtain all or part of the message.

For example, the filtering process may be filtering a heartbeat message of a specific data flow. After filtering processing is performed, the heartbeat message of the data flow is obtained. The filtering process may be: Some features are preset and a message that satisfies the features is retained. That is, the message that satisfies the preset features is a filtered message.

The heartbeat message is a message that exists in the data flow at a specific time interval. The heartbeat message has a fixed feature (for example, 0x64 or 0x65) at a fixed location (for example, a 6^{th} byte). Because the heartbeat message is a message that exists at specific time, a latency (for example, total time from sending a heartbeat request message by a cell phone to a server to receiving, by the cell phone, a heartbeat response message fed back by the server) may be calculated based on the heartbeat message.

The foregoing example is described by using filtering of the heartbeat message as an example. In actual application, filtering processing may be further performed to obtain a data packet message that satisfies another feature.

For another example, a filtering condition may also include: A data packet message having a specific length is selected to be retained. During specific implementation, whether a length of the data packet message is a specific preset length is determined. If the length of the data message is the specific preset length, the message is retained; or if the length of the data message is not the specific preset length, the message is filtered out.

After the above processing, a part of filtered messages are stored in a socket-buffer (Socket-Buffer, SKB) queue (queues).

Policies for reporting the message of the data flow stored in the SKB queue include: immediate reporting and periodic reporting.

For the immediate reporting, a specific thread in the flow reporting module checks the queue in time, and reports the message in the queue to the flow management module in time.

For the periodic reporting, a timer is set in the flow reporting module. The message in the SKB queue is checked in a specific period based on time set by the timer, and some or all of the messages in the queue are reported to the flow management module.

Certainly, in actual application, some of the messages of the data flow stored in the SKB queue need to be immediately reported, and some of the messages need to be periodically reported. According to the same principle, a specific thread in the flow reporting module checks the queue in time, and reports the messages that need to be immediately reported in the queue to the flow management module in time. A timer is further set in the flow reporting module. The messages in the SKB queue are checked in a specific period based on time set by the timer, and the messages that need to be periodically reported in the queue are reported to the flow management module.

It should be noted that when the messages are reported, statistical information related to the messages also needs to be reported.

Based on the foregoing understanding, the flow reporting module does not report all messages sent by the Netfilter component to the flow management module. Instead, messages that satisfy a specific feature (communication parameters and statistical information of the messages that satisfy the specific feature may be carried) are reported to the flow management module. In addition, the communication parameter and the statistical information related to the messages that satisfy the feature is reported.

For example, if both a message 1 and a message 2 are messages of a same data flow. When the flow table lookup is performed after the message 1 is received, statistical information related to the data flow in the flow table is updated based on the message 1. However, because the message 1 does not satisfy the specific feature, the message 1 is filtered out and is not reported to the flow management module. When the flow table lookup is performed after the message 2 is received, the statistical information related to the data flow in the flow table is updated based on the message 2. Because the message 2 satisfies the specific feature, the message 2 is not filtered out, and the message 2 is reported to the flow management module. That is, although a part of messages are reported, the statistical information is obtained based on all messages in the data flow.

305: The flow reporting module periodically reports the communication parameter and the statistical information of the data flow to the flow management module.

The communication parameter of the data flow may include a protocol type, source IP address and port/destination IP address and port, message feature, and message information (packet payload). The protocol type is a protocol type when the application transmits the data flow. The source IP address and port are an IP address and port used by sending the data flow. The destination IP address and port are an IP address and port used by receiving the data flow. The message feature is the header feature of the data packet when the application transmits the data flow. The communication parameter of the data flow may be obtained from the four tuples or five tuples of the message of the data flow.

For example, when an audio/video call is made in a social communication application, the header feature of the data packet corresponding to the data flow begins with 97, namely, data[0]=97. The data packet is transmitted according to the UDP protocol, and the source IP address and port are 221.11.6.XX and 8080, respectively, and the destination IP address and port are 221.14.4.XX and 5050, respectively.

The statistical information of the data flow may include round trip time (round trip time, RTT), a packet loss rate, a quantity of transceived bytes, and a rate (an upstream rate and a downstream rate). The quantity of transceived bytes includes a quantity of sent bytes (namely, an upload flow) and a quantity of received bytes (namely, a downloading flow). The packet loss rate is a ratio of a quantity of lost packets to a quantity of sent packets. The upstream rate is a rate at which the data flow is sent and the downstream rate is a rate at which the data flow is received. The RTT represents a total elapsed duration from transmission of data by the electronic device (a transmitting end) to reception of an acknowledgement (an opposite end sends the acknowledgement immediately after receiving the data) from the opposite end (a receiving end).

For example, when an audio-video call is made on a social communication application, the quantity of bytes transceived is 10 MB/8 MB, the upstream and downstream rates are 200 kbit/180 kbit, respectively, and the RTT is 50 ms.

Certainly, in actual practice, the flow reporting module may also report another parameter of an application network message to the flow management module, such as inter-flow time, inter-packet time, packet size and flow distribution. This is not limited in this application.

Alternatively, the flow reporting module may report a communication parameter the statistical information of the application network message by using one message, or may separately report the communication parameter and the statistical information of the application network message by using a plurality of messages. This is not limited in this application.

306a: The flow management module periodically performs network quality assessment based on the communication parameter and the statistical information of the data flow to obtain a current QoE measurement result.

After receiving the communication parameter and statistical information of the data flow of the application A, the flow management module can query a flow feature library of the application A. For example, the flow management module can identify a service scenario of an application running in the foreground based on features such as a protocol type, a port, a message protocol header of the message (for example, identify a short video playing scenario to be in TikTok) and record the service scenario into the flow table. The flow feature library of the application A stores the various types of information of the data flow of the application A, for example, a protocol feature of a protocol used when the application A uses a current network, and a header feature of a data packet transmitted when the application A uses the current network. Certainly, the information may further include a flow feature existing when the application A uses the current network. This is not limited in this application.

The flow management module may periodically perform QoE assessment on the data flow of the application running in the foreground. In actual application, QoE assessment conditions for different applications may be the same or different. The QoE assessment condition may refer to a condition that is satisfied by the statistical information of the data flow over consecutive periods. The QoE assessment conditions corresponding to different service scenarios of the same application may be the same or different. For example, QoE assessment conditions may be different for a battle scenario and a map running scenario for a game application. For another example, QoE assessment conditions may be different for a video selection scenario, a video playing scenario, and a wicket playing scenario in a video application, and designing different QoE assessment conditions based on different service scenarios may enable the QoE assessment to be more accurate. Different service scenarios can be distinguished by the communication parameter, and when conditions satisfied by the communication parameter are different, service scenarios corresponding to the communication parameter are also different. The same service scenario of the same application may correspond to one or more QoE assessment conditions. Each QoE assessment condition corresponds to one QoE measurement result (which may also be referred to as a QoE assessment result). A plurality of QoE assessment conditions may correspond to the same QoE measurement result. When any of the plurality of QoE assessment conditions is satisfied, a same QoE measurement result can be obtained.

A battle scenario of Arena Valor^{®} is used as an example. The QoE assessment condition corresponding to the battle scenario of Arena Valor^{®} may be a lagging condition assessing the battle based on a condition that a packet loss rate and/or a latency satisfy. For example, if a packet loss rate in the battle scenario satisfies a condition that 2 consecutive occurrences of packet losses are 20% in 3s, and/or a latency of the battle scenario satisfies a condition that 2 consecutive occurrences of latencies are more than 200 ms in 4s, it may be considered that a QoE measurement result of the battle scenario of Arena Valor^{®} appears to be poor, that is, lagging Internet occurs during the battle.

For example, the QoE measurement result may include: good (fluent and not lagging), medium (probable lagging) and poor (lagging). For example, an identifier that the QoE measurement result is good may be 00, an identifier that the QoE measurement result is medium may be 10, and an identifier that the QoE measurement result is poor may be 11.

As shown in Table 5, current service scenarios of the application running in the foreground can be distinguished based on the condition that the communication parameter of the data flow satisfies. Further, QoE measurement results of corresponding service scenarios may be determined based on different QoE assessment conditions to which the different service scenarios correspond. The QoE measurement results are different when the communication parameter and the statistical information of the data flow of the application program separately satisfy different conditions.

**Table 5**

| Application package name | Condition that a communication parameter (protocol type+port+message feature) satisfies | Condition that statistical information (an RTT, a packet loss rate or a rate) satisfies | QoE measurement result |
|---|---|---|---|
| com.tencent.mm | udp protocol+8080/8000 port+97 or 50 message header | Within 3 consecutive periods of 5 periods, a latency exceeds 300 ms or a packet loss exceeds 20% | Poor |
| com.tencent.tmgp.sgame | udp protocol+any port+0x10 message header | A latency within 3 consecutive periods of 5 periods exceeds 150 ms or a packet loss within 3 consecutive periods of 4 periods exceeds 20% | Poor |
| | TCP protocol+443/80 port+GET prefix | After data flows are allocated to a plurality of network channels, rates within 3 consecutive periods of 4 periods are less than 51 kb/s | Poor |
| | TCP protocol+any port+GET prefix | A latency within 4 consecutive periods of 5 periods exceeds 300 ms or there is no downlink packet response within 3 consecutive periods | Poor |
| | UDP protocol+any port+0x10 message header | Within 5 periods, 2 consecutive latencies exceed 200 ms or packet loss rates exceed 10% | Medium |
| | UDP protocol+any port+0x10 message header | Within 5 periods, 2 consecutive latencies do not exceed 200 ms or packet loss rates do not exceed 10% | Good |

com.tencent.mm in Table 5 is a package name of WeChat^{®} and com.tencent.tmgp.sgame is a package name of Arena Valor^{®}. An entry in Table 5 indicates that corresponding QoE measurement results may be obtained when the communication parameter and the statistical information of the data flow of the application program separately satisfy corresponding conditions. For example, the QoE measurement is poor when a data flow of Arena Valor^{®} employs the udp protocol+any port+0x10 message header, and a latency of the data flow exceeds 150 ms within 3 consecutive periods of 5 periods (statistical periods), or a packet loss exceeds more than 20% within 3 consecutive periods of 4 periods.

Table 5 only lists a QoE assessment condition (including conditions that the communication parameter and statistical information of the data flow need to separately satisfy) and a QoE measurement result of a data flow of a part of application programs, and is for example only. In actual application, another different QoE assessment condition may also be employed to obtain a QoE measurement result.

In some cases, erroneous determining may occur based on the QoE measurement result obtained in Table 5. For example, when the user uses a short video application, if the user browses a short video, the short video application starts downloading the short video through a network channel and caches a part of data frames of the downloaded short video, obtains the data frames of the short video from a cache, and starts playing. If the short video is played for a duration of 15 seconds, a downloading rate per unit time rapidly increases from start time to a 2^{nd} second, with the user browsing the short video as the start time; From the 2^{nd} second to a 5^{th} second, the downloading rate per unit time quickly decreases to 0; and from the 5^{th} second to the 15^{th} second when the playing ends, the downloading rate per unit time is maintained at 0.

If the conditions in Table 5 above are used, and it is determined that a latency of the data flow of the short video application exceeds 350 ms within a plurality of consecutive periods or a downstream rate (an average) within the plurality of consecutive periods is less than 51 kb/s, it indicates that the QoE measurement result of the data flow is poor. In the above example, during a 5^{th} second to a 15^{th} second, a rate (an average) within a plurality of consecutive periods is 0, and it may be determined that the current data flow is lagging, that is, transmission quality of a current network channel is poor.

However, in specific application, during a 5^{th} second to a 15^{th} second, network quality of a network channel on which the data flow of the application is located is not poor, except that there is currently no need to download the data flow from another electronic device, so a rate is zero within a quantity of consecutive periods. In view of this, embodiments of this application provide another method of a QoE measurement result of assessing a short video application. A feature of a data flow of a short video application is as follows: Video content is requested from a server by using get according to the http protocol and a mp4 field is carried in a get data packet.

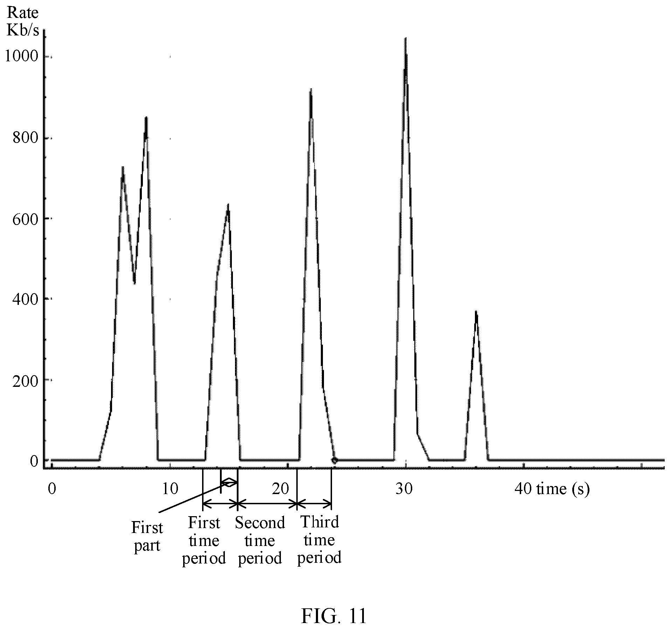

FIG. 11 shows a rate feature of a data flow of a short video application when quality of a network channel is good according to an embodiment of this application. The rate of the video flow is periodically distributed, and each period includes a time period where a rate is not zero and a time period where a rate is zero.

For example, in FIG. 11, rate distribution of the video flow includes: consecutive a first time period, a second time period, and a third time period, where rates of the first time period and the third time period are not 0, and a rate of the second time period is 0. An average rate of a first part of the first time period is greater than a first value, indicating that transmission quality of the video flow satisfies a requirement, and that network quality does not need to be improved, and the electronic device transmits the video flow through a first network interface card in the third time period.

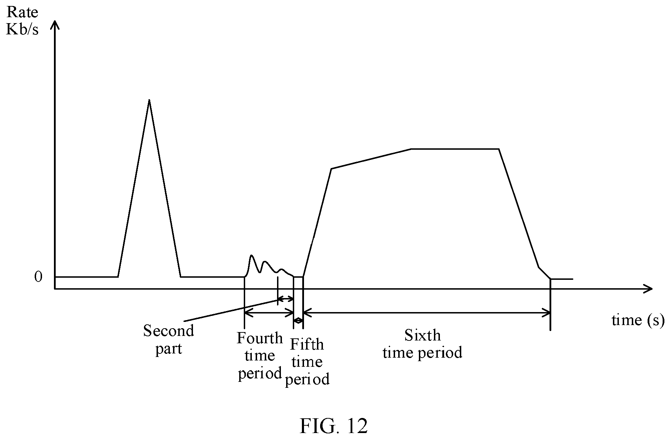

Refer to FIG. 12. Rate distribution of the video flow may also include: consecutive a fourth time period, a fifth time period and a sixth time period, where rates of the fourth time period and the sixth time period are not 0, and a rate of the fifth time period is 0. An average rate of a second part of the fourth time period is less than or equal to a first value, indicating that transmission quality of the video flow does not satisfy a requirement, and that network quality needs to be improved, and the electronic device transmits the video flow in the sixth time period through a second network interface card of the electronic device. A duration of the second part may be set equal to a duration of a first part for a purpose of unification of determining criteria.

In order to make the criterion more accurate when a rate is zero, end time of the first part of the first time period can be set to be the same as end time of the first time period, and end time of the second part of the fourth time period can be set to be the same as end time of the fourth time period.

It can be understood from the rate feature shown in FIG. 11 and the rate feature shown in FIG. 12 that: A case in which the rate is zero is special and needs to be considered separately when the transmission quality of the video flow of the short video application is assessed.

For a period of time in which the rate is not zero, some time (for example, a same duration as the first part) may be selected in the period of time and may be denoted as a seventh time period. An average rate of the seventh time period is determined to be less than or equal to the first value. The electronic device transmits the video flow through the second network interface card in an eighth time period, where start time of the eighth time period is end time of the seventh time period. Certainly, the average rate of the seventh time period is determined to be greater than the first value, and the electronic device transmits the video flow through the first network interface card in the eighth time period.

In a specific implementation, the cases in which the rate is 0 and the rate is not 0 may be considered separately. The rate in this embodiment of this application represents an average downstream rate of the video flow in a mean period (for example, 300 ms, 400 ms, 500 ms, 600 ms, and 700 ms).

A case does not exist in which an average rate is 0: An average rate in a plurality of (for example, 2, 3, 4, or 5) mean periods is small, and transmission quality of the data flow is poor. Certainly, an average rate value in one mean period may be small, and the transmission quality of the data flow is poor.

A case exists in which the average rate is 0: The case appears in which the average rate is zero due to a network reason, generally before the average rate appears to be zero, the average rate starts to become small (in a specific implementation, an average rate may be used in a period of time, and end time of the period of time may be time at which the rate becomes zero), and in this way, the transmission quality needs to be improved; and caching of a currently played short video ends, resulting in the case in which the average rate appears to be zero, generally before the average rate appears to be zero, the average rate is still large, and in this way, the transmission quality does not need to be improved. Therefore, when the average rate appears to be zero, it is needed to track an average rate of a mean period (a mean period of the last non-zero rate) before a mean period in which the average rate first becomes zero; and in particular implementation, an average rate of a period in which the average rate appears to be zero may be delayed by an average rate of a previous mean period (a mean period of the last non-zero rate) in which the average rate first becomes zero. Certainly, it can also be understood that, each time the average rate appears to be zero, an average rate of a previous mean period is delayed. Then when an average rate of a plurality of mean periods is small, the transmission quality of the data flow is poor.

In view of the above descriptions, the average rate of the plurality of mean periods may be set as a reference. Periodic transmission quality of a current mean period is first determined based on an average rate of a single mean period (which may be denoted as a first period), and then data flow transmission quality of a current data flow is determined based on periodic transmission quality of a plurality of mean periods.

When the periodic transmission quality of the single mean period is determined, if the average rate is not 0, the periodic transmission quality of the current mean period may be determined to be poor if the average rate is less than or equal to a threshold A (which may or may not be equal to the first value); and when the average rate is greater than the threshold A, the periodic transmission quality of the current mean period is determined to be good. If the average rate is 0, when an average rate of a previous mean period is delayed, it is equivalent to delaying the periodic transmission quality (poor or good) of the previous mean period. Thus, when the periodic transmission quality of the previous mean period is poor, the periodic transmission quality of the current mean period is considered poor. When the previous mean period is good, the periodic transmission quality of the current mean period is also considered good. Whether to delay the periodic transmission quality of the previous mean period or to delay the rate of the previous mean period when the average rate is zero is not limited in this embodiment of this application. Certainly, in actual application, when the average rate is zero, it may also be determined based on periodic transmission quality of a plurality of (for example, 3, 5, or 7) mean periods previously, for example, determined based on a mode in identifiers of transmission quality of the plurality of mean periods.

In conclusion, a result of periodic transmission quality of a single mean period includes the following.

Good: An average speed of the mean period is greater than or equal to the threshold A (for example, 50 kb/s); or the average rate is equal to 0 and the periodic transmission quality of the previous mean period is good.

Poor: An average speed is less than the threshold A and not equal to 0; or the average rate is equal to 0 and the periodic transmission quality of the previous mean period is poor.

After periodic transmission quality of each mean period is determined, periodic transmission quality of the mean period and M-1 consecutive mean periods before the mean period may be checked in the mean period. Data flow transmission quality of the data flow is determined to be poor if, in periodic transmission quality of M consecutive mean periods, periodic transmission quality of at least N mean periods is poor. N is less than or equal to M. Data flow transmission quality of the data flow is determined to be good if periodic transmission quality of less than N mean periods is poor.

306b: The flow management module periodically reports the current QoE measurement result to the decision module.

It should be noted that, After the application A is launched, the flow reporting module may periodically detect network quality of a network used by the application A and periodically report a communication parameter and statistical information of an application network message. The flow management module periodically performs network quality assessment based on the communication parameter and the statistical information of the application network message to obtain the QoE measurement result, and periodically notifies the decision module of the current QoE measurement result until the application A is closed.

In other words, during launching (or running in the foreground) of the application A, the flow reporting module continuously periodically detects the network quality of the network used by the application A. The flow management module continuously periodically performs network quality assessment to obtain the QoE measurement result, and periodically notifies the decision module of the current QoE measurement result.

That is, steps 305 to 306b may be periodically performed during the launching (or running in the foreground) of the application A.

In addition, after the application A is launched, the following steps may be further included:

307: The application A sends a registration request to a network acceleration service module, where the registration request is used to request an elevator prediction service, so that the application A can perceive whether the user arrives at the elevator entrance.

The registration request may carry an identifier of the application A and an identifier of a service (the elevator prediction service) that needs to be registered. The elevator prediction service may perceive whether the user arrives at the elevator or gets into the elevator. After the application A registers the elevator prediction service, the application A can learn whether the user arrives at the elevator or gets into the elevator.

308a: The network acceleration service module sends the registration request to the perception module.

308b: The perception module sends the registration request to the fence management module.

309a: The fence management module records application information for registering a prediction ability of the elevator, and sends a registration result to the perception module.

After receiving the registration request of the application A, the fence management module authenticates and verifies the registered application, for example, the following can be determined: (1) querying the application configuration library to determine whether the application A supports the network acceleration; (2) determining whether the application A is running in the foreground; and (3) determining whether the application A has an elevator prediction permission. It should be noted that, If the application A needs to register the elevator prediction service, the application A may first register a developer on a developer website (for example, a developer website of Honor), and after success of registering the developer, the application A can apply permissions for appid and an elevator prediction service kit. The kit is a software development kit (software development kit, SDK) for providing basic services to (an application program at) the application layer. Subsequently, the perception module checks whether the application A is a legitimate user registered on the developer website of Honor, and checks whether the application A has the permission for the elevator prediction service kit (namely, the elevator prediction permission). The application having the elevator prediction permission may obtain an elevator event (for example, an event of the user arriving at the elevator entrance to wait for the elevator, or an event of the user getting into the elevator) from an operating system of the electronic device, and determine whether to perform network acceleration processing based on the elevator event. The network acceleration processing includes at least one of caching running data of a first application in advance, reducing a frame rate of the first application, reducing a code rate of the first application, or reducing resolution of the first application.

Upon successful authentication and verification of the registered application by the fence management module, for example, determining that the application A supports the network acceleration, that the application A runs in the foreground, and that the application A has the elevator prediction permission, application information of the application A may be recorded. The fence management module may send the registration result to the perception module, and the registration result is that the registration is successful. In this way, subsequently, a corresponding registrant (for example, the application A) is notified upon detection of the elevator event by the fence management module.

309 b: The perception module sends the registration result to the network acceleration service module.

310: The network acceleration service module sends the registration result to the application A.

It should be noted that, there is no necessary order of sequence between steps 302 to 306b and 307 to 310. Steps 302 to 306b may be performed first, and then steps 307 to 310 may be performed; steps 307 to 310 may be performed first, and then step 302 to step 306b may be performed; or steps 302 to 306b and steps 307 to 310 are performed simultaneously. An execution sequence of steps is not limited in this embodiment of this application.

311: The decision module reports lagging information to the fence management module.

When the decision module receives the lagging information from the flow management module (that is, the QoE measurement result appears to be poor (lagging)), the lagging information may be sent to the fence management module.

312: The fence management module collects lagging fingerprint information after receiving the lagging information, and revises, based on the lagging fingerprint information, a Wi-Fi connection list (a Wi-Fi list) to which the elevator corresponds.

The lagging fingerprint information may include a timestamp (time at which the lagging information is received) and the Wi-Fi connection list collected after receiving the lagging information (including the address and the signal strength of the Wi-Fi access point), GPS, and other information. Optionally, the lagging fingerprint information may further include information such as a model of the electronic device.

The electronic device may revise, based on the lagging fingerprint information, the Wi-Fi list to which the elevator corresponds, to enable the fence data to be more accurate. If the fence management module never receives the lagging information reported by the decision module when the electronic device is connected to a Wi-Fi access point (for example, a first Wi-Fi access point) of one elevator (for example, a first elevator), it is considered that the lagging is not occurred when the user takes the elevator (for example, a scenario in which there is an AP of Wi-Fi in the elevator), and then the fence data need not be generated for the elevator, to be specific, information such as the Wi-Fi connection list collected by the electronic device at the elevator can be filtered out.

In some embodiments, the electronic device may periodically upload the collected lagging fingerprint information to the cloud server, so that the cloud server updates the fence data based on the lagging fingerprint information.

313: The fence management module monitors a motion state change of the user, detects whether there is the fence to which the elevator corresponds when the motion state change of the user satisfies a preset condition, and determines that the user arrives at the elevator entrance if detecting the fence to which the elevator corresponds.

The preset condition is set for a motion feature when the user takes the elevator. It can be understood that the user generally needs to walk to the elevator entrance when the user takes the elevator, and waits still for an elevator door to open before the elevator entrance. For example, the preset condition may be that the user converts from a walking state to a stop state, and remains in a relatively still state (for example, remaining 5s). The motion state of the user (for example, a walking state or a still state) may be determined based on data collected by a gyroscope.

Optionally, an acceleration sensor or a gyroscope sensor may be disposed in the electronic device to recognize whether a state of the user is the walking state or the stop state.

It can be understood that the user generally converts from walking to stopping while waiting for the elevator, and the electronic device can determine that the user converts from the motion state to the stop state based on a change in a speed. A prediction of whether the user waits to get into the target elevator is triggered, and whether the user waits to get into the target elevator can be further determined.

Optionally, before whether there is the fence to which the elevator corresponds is detected, whether current time is within a preset time period can be determined, where the preset time period may be rush hour (for example, 8: 30-9: 30, 17: 30-18: 30). It can be understood that there is a high possibility that the user takes the elevator within the preset time period. Therefore, detecting whether there is the fence to which the elevator corresponds within the preset time period can avoid waste of power consumption.

The fence management module detects whether there is the fence to which the elevator corresponds around, for example, detecting whether there is corresponding fence data for a BSSID corresponding to Wi-Fi to which the electronic device is currently connected. If there is fence data for the BSSID corresponding to the Wi-Fi connected, the electronic device may perform Wi-Fi information scanning. The fence management module obtains scanned Wi-Fi information to match with the fence data stored by the electronic device, and determines whether scanned BSSID satisfies a preset condition. For example, the preset condition may be that the scanned BSSID overlaps (that is, having a same BSSID) with the BSSID in the fence data (target fence data) corresponding to the elevator, and a ratio of a quantity of BSSIDs having a signal strength difference less than t dbm in same BSSIDs to a quantity of all BSSIDs in the target fence data is greater than 80%. If the scanned BSSID satisfies the preset condition, and the matching is successful, an event of arriving at the elevator entrance is reported.

Optionally, the electronic device stores a fence corresponding at least one elevator. For example, the electronic device may store a fence corresponding to an elevator near a residence (home) of the user, a fence corresponding to an elevator near an office of the user, or a fence corresponding to an elevator near a dining room or a supermarket that a user frequents. In the fence corresponding to the at least one elevator stored by the electronic device, a fence corresponding to each elevator corresponds to an address (for example, a BSSID) of one Wi-Fi access point that is an often-used (often-connected) Wi-Fi access point when the user gets into or off the elevator. For example, in a scenario where the target elevator is in an office, an address of a Wi-Fi access point to which the user is connected at the target elevator of the office may be used to correspond to a fence corresponding to the elevator of the office. For another example, in a scenario where the target elevator is in a residence, an address of a Wi-Fi access point to which the user is connected in the residence may be used to correspond to a fence corresponding to the elevator of the residence.

If a quantity of same addresses of Wi-Fi access point between the Wi-Fi list information currently scanned by the electronic device and the target fence data satisfies a first condition, it is determined that the user waits to get into the target elevator.

Alternatively, the first condition may be that the quantity of the same addresses of the Wi-Fi access points between the Wi-Fi list information currently scanned by the electronic device and the target fence data exceeds a second threshold. The second threshold may be 1, 2, 3, 4, or more. A specific value of the second threshold is not limited in this embodiment of this application.

For example, an example is used in which the second threshold is 2. Refer to Table 6. The same addresses of the Wi-Fi access points between the Wi-Fi list currently scanned by the electronic device and the target fence data are: an address 1, an address 2, an address 4 and an address 5 connected. The quantity of the same addresses of the Wi-Fi access points between the Wi-Fi list currently scanned by the electronic device and the target fence data exceeds 2, and the electronic device may determine that the user waits to get into the target elevator.

**Table 6**

| Wi-Fi list currently scanned by the electronic device | | Target fence data | |
|---|---|---|---|
| Address of the Wi-Fi access point | Signal strength of a network (dBm) | Address of the Wi-Fi access point | Signal strength of a network (dBm) |
| Connected BSSID1 | -50 | Connected BSSID1 | -48 |
| BSSID2 | -60 | BSSID2 | -78 |
| BSSID3 | -70 | BSSID4 | -58 |
| BSSID4 | -62 | BSSID5 | -47 |
| BSSID5 | -72 | BSSID7 | -77 |
| BSSID8 | -72 | | |
| BSSID9 | -84 | | |

Optionally, the first condition may also be that a ratio of the quantity of the same addresses of the Wi-Fi access points between the Wi-Fi list information currently scanned by the electronic device and the target fence data to a quantity of all Wi-Fi access points in the target fence data exceeds a third threshold.

Alternatively, the third threshold may be 50%, 60%, 70%, or 80%. A specific value of the third threshold is not limited in this embodiment of this application.

For example, an example is used in which the third threshold is 70%. Again refer to Table 6. The quantity of the same addresses of the Wi-Fi access points between the Wi-Fi list currently scanned by the electronic device and the target fence data is 4. The quantity of all the Wi-Fi access points in the target fence data is 5. A ratio of the quantity of the same addresses of the Wi-Fi access points is 80% that exceeds 70% of the third threshold. The electronic device may determine that the user waits to get into the target elevator.

In the above method provided by this embodiment of this application, when whether the user waits to get into the target elevator is predicted, the fence data pre-stored by the electronic device can be compared with the Wi-Fi network list currently scanned by the electronic device. When the first condition is satisfied, the electronic device can determine that the user waits to get into the target elevator.

In one possible design, it is determined that a quantity of matchable Wi-Fi access points in the same addresses of the Wi-Fi access points satisfies the second condition before the user is determined to wait to get into the target elevator. The matchable Wi-Fi access point is a Wi-Fi access point, in the same addresses of the Wi-Fi access points, having a corresponding signal strength difference of networks less than the first threshold. Optionally, the first threshold may be 5, 8, 10, or 12. A specific value of the first threshold is not limited in this embodiment of this application.

For example, an example is used in which the first threshold is 10. Again refer to Table 6. The same addresses of the Wi-Fi access points between the Wi-Fi list currently scanned by the electronic device and the target fence data are: an address 1, an address 2, an address 4, and an address 5 connected. A signal strength difference of networks of the address 1 connected to the Wi-Fi list currently scanned by the electronic device and the address 1 connected to the target fence data is 2, less than the first threshold, that is, the connected address 1 is the matchable Wi-Fi access point. A signal strength difference of networks of the address 2 of the Wi-Fi list currently scanned by the electronic device and the address 2 of the target fence data is 18, greater than the first threshold, that is, the address 2 is not the matchable Wi-Fi access point. Similarly, the address 4 is the matchable Wi-Fi access point and the address 5 is not the matchable Wi-Fi access point.

Optionally, the second condition may be that the quantity of the matchable Wi-Fi access points exceeds a fourth threshold. Optionally, the fourth threshold may be 2, 3, 4, or more. A specific value of the fourth threshold is not limited in this embodiment of this application.

For example, an example is used for description in which the fourth threshold is 3. Again refer to Table 6. With reference to the above descriptions of the matchable Wi-Fi access point, the quantity of matchable Wi-Fi access points in Table 6 is 2, that is, the Wi-Fi list currently scanned by the electronic device in Table 6 does not satisfy the second condition, and the electronic device determines that the user does not wait to get into the target elevator.

Optionally, the second condition may be that a ratio of the quantity of the matchable Wi-Fi access points to the quantity of all the Wi-Fi access points in the target fence data exceeds a fifth threshold. Optionally, the fifth threshold may be 50%, 60%, 70%, or 80%. A specific value of the fifth threshold is not limited in this embodiment of this application.

For example, an example is used for description in which the fifth threshold is 70%. Again refer to Table 6. With reference to the above descriptions of the matchable Wi-Fi access point, the quantity of matchable Wi-Fi access points in Table 6 is 2, the quantity of all the Wi-Fi access points in the target fence data in Table 6 is 5, and a ratio of the quantity of the matchable Wi-Fi access points to the quantity of all the Wi-Fi access points in the target fence data is 40%, that is, the electronic device determines that the user does not wait to get into the target elevator.

In the above method provided in this embodiment of this application, when whether the user waits to get into the target elevator is predicted by using the fence data, when prediction is performed by using a same address of a Wi-Fi access point between the Wi-Fi access point currently scanned by the electronic device and the target fence data, signal strength of a network is introduced, to increase similarity of a geographic location where the fence data represents the corresponding target elevator is located, and improve accuracy of the prediction.

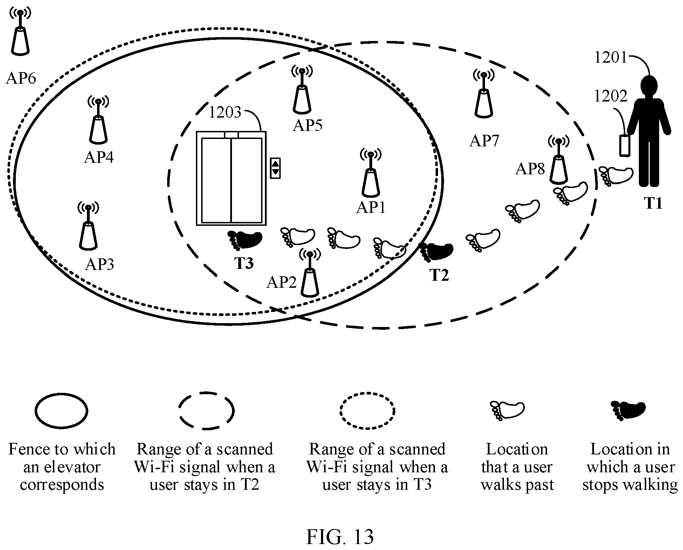

In actual application, as shown in FIG. 13, a user 1201 walks from a T1 location to a T2 location carrying an electronic device 1202, and stops walking at the T2 location. If the user is in a still state at the T2 location (no displacement, but not representing that a body is not moving) for more than 5s, the electronic device 1202 may enable fence detection to detect whether there is a fence around to which an elevator corresponds. Specifically, the electronic device 1202 may perform Wi-Fi list scanning and compare a scanned Wi-Fi list with pre-stored fence data. If a ratio of a quantity of same BSSIDs having a signal strength difference less than t dbm to a quantity of all Wi-Fi access points in target fence data is less than 80%, it is considered that matching is unsuccessful, a prediction result is that the user is not within an elevator fence, and it is determined that the user does not arrive at an elevator entrance. t may be 5, 8, 10, or 12.

For example, a BSSID and the scanned Wi-Fi list to which the electronic device 1202 is connected at the T2 location may be as shown in Table 7. A Wi-Fi access point to which the electronic device 1202 is connected at the T2 location is AP1 (AP1 corresponds to BSSID1, to be specific, the electronic device 1202 is connected to BSSID1 at the T2 location), and signal strength of AP1 is -50. Wi-Fi access points scanned by the electronic device 1202 at the T2 location may include AP2, AP5, AP7, and AP8. AP2, AP5, AP7, and AP8 respectively correspond to BSSIDs of BSSID1, BSSID2, BSSID5, BSSID7, and BSSID8, and signal strength of -60, -42, -32, and - 30, respectively.

**Table 7**

| | Address of the Wi-Fi access point | Signal strength of a network (dBm) |
|---|---|---|
| Connected BSSID | BSSID1 | -50 |
| Scanned BSSID | BSSID2 | -60 |
| | BSSID5 | -42 |
| | BSSID7 | -32 |
| | BSSID8 | -30 |

An example is used in which a Wi-Fi list corresponding to a fence corresponding to an elevator is Table 8. It can be learned that same BSSIDs in the Wi-Fi list scanned by the electronic device 1202 at the T2 location and the Wi-Fi list to which the elevator corresponds to the fence may include BSSID1, BSSID2, and BSSID5. Signal strength differences of BSSID1, BSSID2, and BSSID5 are 2, 18, and 35, respectively. A ratio of a quantity of same BSSIDs having a signal strength difference less than t dbm (for example, t=10) is less than 80%. Therefore, matching is unsuccessful, a prediction result is that the user is not within the elevator fence, and it is determined that the user does not arrive at the elevator entrance.

**Table 8**

| | Address of the Wi-Fi access point | Signal strength of a network (dBm) |
|---|---|---|
| Connected BSSID | BSSID1 | -48 |
| Scanned BSSID | BSSID2 | -78 |
| | BSSID3 | -58 |
| | BSSID4 | -47 |
| | BSSID5 | -77 |

Further, the user walks from the T2 location to the T3 location, and stops walking at the T3 location. If the user is in a still state at the T3 location for more than 5s, the electronic device 1202 may again enable the fence detection to detect whether there is the fence around to which the elevator corresponds. Specifically, the electronic device 1202 may perform Wi-Fi list scanning and compare a scanned Wi-Fi list with pre-stored fence data. If a ratio of a quantity of same BSSIDs having signal strength difference less than t dbm is greater than 80%, it is considered that matching is successful, a prediction result is that the user is within the elevator fence, it is determined that the user arrives at the elevator entrance, and an event of arriving at the elevator entrance can be reported to the perception module.

For example, the Wi-Fi list scanned by the electronic device 1202 at the T2 location may be as shown in Table 9. A Wi-Fi access point to which the electronic device 1202 is connected at the T3 location is AP1 (AP1 corresponds to BSSID1, to be specific, the electronic device 1202 is connected to BSSID1 at the T2 location), and signal strength of AP1 is -50. The Wi-Fi access points scanned by the electronic device 1202 at the T3 location may include AP2, AP3, AP4, and AP5. AP2, AP3, AP4, and AP5 respectively correspond to BSSIDs of BSSID1, BSSID2, BSSID5, BSSID7, and BSSID8, and signal strength of -80, -58, -48, and -78, respectively.

**Table 9**

| | Address of the Wi-Fi access point | Signal strength of a network (dBm) |
|---|---|---|
| Connected BSSID | BSSID1 | -49 |
| Scanned BSSID | BSSID2 | -80 |
| | BSSID3 | -58 |
| | BSSID4 | -48 |
| | BSSID5 | -78 |

An example is used in which the Wi-Fi list corresponding to the fence corresponding to the elevator is Table 8. It can be learned that same BSSIDs in the Wi-Fi list scanned by the electronic device 1202 at the T3 location and the Wi-Fi list corresponding to the fence corresponding to the elevator may include AP1, AP2, AP3, AP4, and AP5. A ratio of a quantity of same BSSIDs having a signal strength difference less than t dbm (for example, t=10) is greater than 80%. Therefore, matching is successful, a prediction result is that the user is within the elevator fence, and it is determined that the user arrives at the elevator entrance.

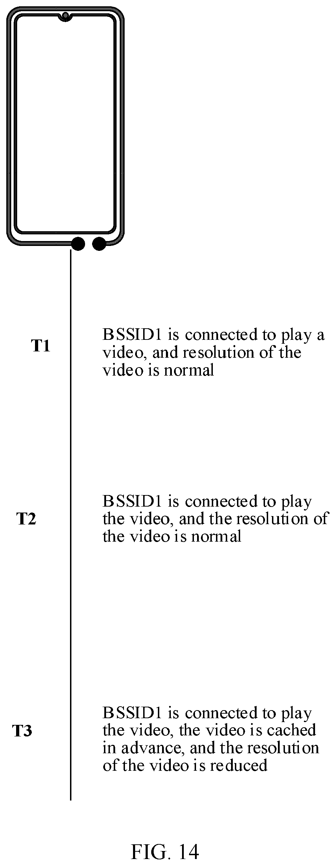

Refer to FIG. 13. It is assumed that the application A is a short video application, as shown in FIG. 14, the electronic device can be connected to BSSID1 to play a video at the T1 location, and resolution of the video is normal; BSSID1 can be connected to play the video at the T2 location, and the resolution of the video is normal; and BSSID1 can be connected to play the video at the T3 location, the video is cached in advance, and the resolution of the video is reduced.

314: The fence management module notifies the perception module of an event of the user arriving at the elevator entrance to wait for the elevator.

315: The perception module notifies the network acceleration service module of the event of the user arriving at the elevator entrance to wait for the elevator.

316: The network acceleration service module notifies the application A of the event of the user arriving at the elevator entrance to wait for the elevator.

317: The application A receives the event of the user arriving at the elevator entrance to wait for the elevator, and performs network acceleration in advance.

The application A receives the event of the user arriving at the elevator entrance to wait for the elevator, and determines that the user waits to get into the target elevator. The application A (the first application) performs network acceleration processing. The network acceleration processing includes at least one of caching running data of the first application in advance, reducing a frame rate of the first application, reducing a code rate of the first application, or reducing resolution of the first application.

An example is used in which the application A is a video application. After the application A receives the event of the user arriving at the elevator entrance to wait for the elevator, the application A may cache a currently playing video or a video that is about to play in advance, and/or reduce the resolution of the current video, to reduce a subsequent lagging phenomenon of the video and improve a user experience.

An example is used in which the application A is a game application. After the application A receives the event of the user arriving at the elevator entrance to wait for the elevator, the application A may switch a game server and reduce a frame rate of a game, to reduce a subsequent lagging phenomenon and improve a user experience.

318: The fence management module determines that the user gets into the elevator.

The user gets into the elevator from the T3 location, and the electronic device detects a sharp drop in Wi-Fi signal strength (a drop magnitude of signal strength is greater than a preset threshold) at the moment when an elevator door is closed. The fence management module determines that the user gets into the elevator based on a change in the Wi-Fi signal strength, and may report an event of getting into the elevator to the perception module, to notify that the user gets into the elevator. Optionally, a seventh threshold may be -60 dBm, -70 dBm, or -75 dBm. A specific value of the seventh threshold is not limited in this embodiment of this application.

319: The fence management module notifies the perception module of the event of the user getting into the elevator.

320: The perception module notifies the decision module of the event of the user getting into the elevator.

321: The decision module executes a system acceleration policy to request a new network channel for tuning after receiving the event of the user getting into the elevator.

322: The decision module sends a better path request to the path management module.

The better path request is used to request a better-quality network channel than the current network channel.

323: The path management module activates and probes the network quality, to determine that there is a better-quality network channel than the current network channel.

The path management module may activate and probe network quality of each network channel when receiving the better path request sent by the decision module, to determine whether there is the better-quality network channel than the current network channel.

In actual application, if a wireless network interface card 1 of a 2.4 GHz frequency band, a wireless network interface card 2 of a 5.0 GHz frequency band, a data service network interface card 1 of an operator A, and a data service network interface card 2 of an operator B are disposed in the electronic device, one of the wireless network interface card 1 or the wireless network interface card 2 may be considered as primary Wi-Fi by default, the other wireless network interface card is secondary Wi-Fi; or one of the data service network interface card 1 of the operator A and the data service network interface card 2 of the operator B is considered as a primary card by default, and the other data service network interface card is a secondary card.

For example, a network channel of the 2.4 GHz frequency band is a primary Wi-Fi network, a network channel of the 5.0 GHz frequency band is a secondary Wi-Fi network, a network channel corresponding to the data service network interface card 1 is a primary cellular network, and a network channel corresponding to the data service network interface card 2 is a secondary cellular network.

When the primary Wi-Fi network is available, the system considers, by default, that a current primary network of the electronic device or the foreground application is the primary Wi-Fi network. When the primary Wi-Fi network is unavailable, the system considers, by default, that the current primary network of the electronic device or the foreground application is a primary card cellular network. When the primary card cellular network is unavailable, the system considers, by default, that the current primary network of the electronic device or the foreground application is the secondary Wi-Fi network. When the secondary Wi-Fi network is unavailable, the system considers, by default, that the current primary network of the electronic device or the foreground application is a secondary card cellular network.

When the application A runs in the foreground after being launched, the application A uses the primary network according to the above rule. Even when the application A is in the foreground, the system switches a part of data flows of the application A to another network. After the application A is switched to the background, a default primary network of the system is restored to be used for the data flows of the application A again. After the application A is switched from the background to the foreground, the application A continues to use the default primary network of the system.

The path management module may request in sequence in an order of primary Wi-Fi, a primary card network, secondary Wi-Fi, and a secondary card network until a network channel is found that is available and has quality that satisfies a requirement (network quality is better than the network channel currently being used).

324: The path management module notifies the decision module of the better-quality network channel.

The path management module may notify the decision module of a network path of a network that is available and has quality that satisfies a requirement.

325: The decision module notifies a policy execution module at the kernel layer to switch the data flow of the application A to the better network channel.

That is, the decision module triggers the switching to switch the data flow of the application A to the better network channel. For example, the data flow of the application A may be switched from the Wi-Fi network to the cellular network (signal quality of the cellular network in the elevator is better than the Wi-Fi network).

326: The policy execution module switches the data flow of the application A to the better network channel.

In this way, the application A can access Internet through the better network channel, and a user experience can be improved.

In some embodiments, the decision module may notify the policy execution module at the kernel layer to switch the data flow of the application A to a plurality of better-quality (network quality is better than the network channel currently used) network channels. The policy execution module switches the data flow of the application A to the plurality of better-quality network channels, so that the application A can access Internet through the plurality of better-quality network channels, and a user experience can be improved.

327: The fence management module detects that the user gets off the elevator.

328: The fence management module notifies the perception module of an event of the user getting off the elevator.

329: The perception module notifies the decision module of the event of the user getting off the elevator.

330: After receiving the event of the user getting off the elevator, the decision module restores services of the application A to the Wi-Fi network.

That is, the decision module may switch the services of the application A from the cellular network back to the Wi-Fi network (the signal quality of the Wi-Fi network out of the elevator is better than the cellular network).

When the application A stops running or switches to the background, the following steps may be performed:

331: The application A sends a de-registration request to the network acceleration service module to request to stop the elevator prediction service.

332: The network acceleration service module sends the de-registration request to the perception module.

333: The perception module sends the de-registration request to the fence management module, to notify the fence management module to stop the elevator prediction service of the application A.

334: The fence management module stops the elevator prediction service of the application A, and no longer notifies the application A of whether the user gets into the elevator.

335: The perception module notifies the decision module to stop the network acceleration and the QoE measurement for the application A.

After perceiving that the application A stops running, is switched to the background, or receives the de-registration request sent by the application A, the perception module notifies the decision module to stop the network acceleration for the application, restores the data flow, and releases a requested network.

336: The decision module notifies the policy execution module to stop the network acceleration and the QoE measurement for the application A.

337: The policy execution module stops the network acceleration and the QoE measurement for the application A.

It should be understood that sequence numbers of the steps in the foregoing embodiments do not mean execution sequences. The execution sequences of the procedures should be determined based on functions and internal logic of the procedures, and should not be construed as any limitation on the implementation procedures of embodiments of this application.

Based on the network acceleration method provided in this embodiment of this application, during the user waiting near the elevator entrance, the operating system of the electronic device can notify the currently running application of the event of the user waiting for the elevator, so that the currently running application can perform processing such as caching application data in advance and/or reducing resolution based on the event of the user waiting for the elevator. Therefore, the user can subsequently continue to view relevant content of the application (for example, continue to browse a short video, or continue to watch a movie) in the elevator. Further, at the moment of the elevator closing the door, the electronic device can switch the data flow of the application from the Wi-Fi network to the cellular network, thereby ensuring that the user can still have a smooth Internet experience after getting into the elevator, greatly reducing a probability of lagging Internet of the application, and better improving a user Internet experience.

It should be understood that sequence numbers of the steps in the foregoing embodiments do not mean execution sequences. The execution sequences of the procedures should be determined based on functions and internal logic of the procedures, and should not be construed as any limitation on the implementation procedures of embodiments of this application.

An embodiment of this application further provides a computer-readable storage medium. The computer-readable storage medium stores a computer program, and when the computer program is executed by a processor, the steps in the foregoing method embodiments may be implemented.

An embodiment of this application further provides a computer program product. When the computer program product runs on a first device, the first device is enabled to implement the steps in the foregoing method embodiments.

When an integrated unit is implemented in a form of a software functional unit and sold or used as an independent product, the integrated unit may be stored in a computer-readable storage medium. Based on such an understanding, in this application, all or some of the procedures in the methods in the foregoing embodiments may be implemented by a computer program instructing related hardware. The computer program may be stored in a computer-readable storage medium. When the computer program is executed by a processor, the steps in the foregoing method embodiments may be implemented. The computer program includes computer program code, and the computer program code may be in a source code form, an object code form, an executable file form, some intermediate forms, or the like. The computer-readable medium may at least include: any entity or apparatus that can carry the computer program code to the first device, a recording medium, a computer memory, a read-only memory (ROM, Read-Only Memory), a random access memory (RAM, Random Access Memory), an electric carrier signal, a telecommunication signal and a software distribution medium, or the like, for example, a USB flash drive, a removable hard disk, a magnetic disk, or an optical disc. In some jurisdictions, the computer-readable medium cannot be an electrical carrier signal or a telecommunications signal according to legislation and patent practice.

An embodiment of this application further provides a chip system. The chip system includes a processor. The processor is coupled to a storage, and the processor executes a computer program stored in the storage, to implement the steps in any method embodiment of this application. The chip system may be a single chip or a chip module including a plurality of chips.

In the foregoing embodiments, the descriptions of the embodiments have respective focuses. For a part that is not described in detail in an embodiment, refer to related descriptions in other embodiments.

A person of ordinary skill in the art may notice that the exemplary units and algorithm steps described with reference to the embodiments disclosed in this specification can be implemented in electronic hardware, or a combination of computer software and electronic hardware. Whether the functions are executed in a mode of hardware or software depends on particular applications and design constraint conditions of the technical solutions. A person skilled in the art can use different methods to implement the described functions for each particular application, but it should not be considered that the implementation goes beyond the scope of the embodiments of the present disclosure.

The above embodiments are merely used for describing the technical solutions of embodiments of this application, but are not intended to limit embodiments of this application.

## Claims

1. A network acceleration method, applied to an electronic device (100, 1202), comprising:
running, by the electronic device (100, 1202), a first application;
obtaining, a quality of experience, QoE, measurement result of the first application;
collecting lagging fingerprint information if the QoE measurement result appears to be lagging;
revising at least one piece of fence data of a geofence to which a target elevator corresponds based on the lagging fingerprint information;predicting, by the electronic device (100, 1202), whether a user (1201) waits to get into the target elevator based on revised at least one piece of fence data of a geofence to which the target elevator corresponds; and
performing, by the first application of the electronic device (100, 1202), network acceleration processing if determining that the user (1201) waits to get into the target elevator, wherein the network acceleration processing comprises at least one of caching operation data of the first application in advance, reducing a frame rate of the first application, reducing a code rate of the first application, or reducing resolution of the first application.

2. The method according to claim 1, wherein the electronic device stores at least one piece of fence data of a geofence to which an elevator corresponds, wherein the fence data comprises an address of a Wi-Fi access point to which the electronic device (100, 1202) can be connected near the elevator and searchable Wi-Fi list information, and the Wi-Fi list information comprises an address of at least one Wi-Fi access point; and
the predicting, by the electronic device (100, 1202), whether a user (1201) waits to get into a target elevator comprises:
obtaining target fence data from the at least one piece of fence data of the geofence to which the elevator corresponds, wherein the address of the Wi-Fi access point that can be connected to, indicated by the target fence data, is the same as an address of a Wi-Fi access point to which the electronic device (100, 1202) is currently connected;
obtaining, by the electronic device (100, 1202), current first Wi-Fi list information, wherein the current first Wi-Fi list information comprises an address of a Wi-Fi access point that the electronic device (100, 1202) can currently search; and
determining that the user (1201) waits to get into the target elevator if a quantity of same addresses of Wi-Fi access points between the current first Wi-Fi list information and searchable Wi-Fi list information indicated by the target fence data satisfies a first condition.

3. The method according to claim 2, wherein the Wi-Fi list information further comprises signal strength of a network corresponding to the address of the Wi-Fi access point, and before the determining that the user (1201) waits to get into the target elevator, the method further comprises:
a quantity of matchable Wi-Fi network access points in the same addresses of the Wi-Fi network access points satisfying a second condition, and the matchable Wi-Fi network access point is a Wi-Fi network access point in the same address of the Wi-Fi network access point for which a difference in corresponding signal strength of the network is less than a first threshold.

4. The method according to claim 2, wherein
the first condition is that the quantity of the same addresses of the Wi-Fi access points between the current first Wi-Fi list information and the target fence data exceeds a second threshold, or
the first condition is that a ratio of the quantity of the same addresses of the Wi-Fi access points between the current first Wi-Fi list information and the target fence data to a quantity of all Wi-Fi access points in the target fence data exceeds a third threshold;
and
the second condition is that the quantity of the matchable Wi-Fi network access points exceeds a fourth threshold, or
the second condition is that a ratio of the quantity of the matchable Wi-Fi network access points to a quantity of all Wi-Fi access points in the target fence data exceeds a fifth threshold.

5. The method according to any one of claims 1 to 4, wherein the electronic device (100, 1202) comprises a fence management module, wherein
the fence management module is configured to collect the second Wi-Fi list information when the user (1201) gets into or off the elevator, when it is determined that the user (1201) gets into or off the elevator and the electronic device (100, 1202) is connected to the Wi-Fi network, and
cluster, based on the second Wi-Fi list information, to generate the at least one piece of fence data of the geofence to which the elevator corresponds, or send the second Wi-Fi list information to the server, and receive the at least one piece of fence data of the geofence to which the elevator corresponds from the server.

6. The method according to claim 5, wherein the electronic device (100, 1202) further comprises a perception module, and the method further comprises:
perceiving, by the perception module, that the first application is launched, and querying whether the first application supports network acceleration, wherein
the perception module comprises an application configuration library in which information of whether a plurality of application programs support the network acceleration is stored, and the plurality of application programs comprise the first application, wherein
the plurality of application programs in the application configuration library are application programs that need the network acceleration determined based on user (1201) data consumption and user (1201) usage preference for an application, or the plurality of application programs in the application configuration library are applications that need the network acceleration determined based on manual setting by the user (1201).

7. The method according to claim 6, wherein the electronic device (100, 1202) further comprises a decision module and a kernel layer of the electronic device (100, 1202) further comprises a flow reporting module, and the method further comprises:
sending, by the perception module, a network quality assessment request to the decision module if it is determined that the first application supports the network acceleration, wherein the network quality assessment request comprises an application identifier of the first application, configuration information of the application, and a criterion for network quality assessment, and the configuration information of the application comprises a header feature of a data packet when the first application transmits a data flow;
registering, by the decision module, a message monitoring hook with the flow reporting module, wherein the message monitoring hook is used to periodically probe a path of a network channel used by the first application and monitor a communication parameter and statistical information of the data flow transmitted through the network channel used by the first application.

8. The method according to claim 7, wherein the electronic device (100, 1202) further comprises a flow management module, and the method further comprises:
periodically reporting, by the flow reporting module, the communication parameter and the statistical information of the data flow of the first application to the flow management module, wherein the communication parameter comprises at least one of a protocol type, a source Internet Protocol IP address and port/destination IP address and port, or a message feature, and the statistical information comprises at least one of round trip time RTT, a packet loss rate, a quantity of bytes transceived, or a rate;
periodically performing, by the flow management module, network quality assessment based on the communication parameter and the statistical information to obtain a current quality of experience QoE measurement result; and
periodically reporting, by the flow management module, the current QoE measurement result to the decision module.

9. The method according to any one of claims 5 to 8, wherein the electronic device (100, 1202) further comprises a network acceleration service module, and the method further comprises:
sending, by the first application, a registration request to the network acceleration service module, wherein the registration request is used to request an elevator prediction service in order for the first application to perceive whether the user (1201) arrives at an elevator entrance to wait to get into the target elevator;
sending, by the network acceleration service module, the registration request to the perception module; and
sending, by the perception module, the registration request to the fence management module;
after the fence management module receives the registration request, if it is determined that the first application supports the network acceleration, the first application runs in a foreground, and the first application have an elevator prediction permission, recording application information of the first application, and sending a registration result to the perception module, wherein the registration result appears to be successful;
sending, by the perception module, the registration result to the network acceleration service module; and
sending, by the network acceleration service module, the registration result to the first application.

10. The method according to claim 9, wherein the method further comprises:
monitoring, by the fence management module, a motion state change of the user (1201);
detecting whether there is the geofence to which the elevator corresponds when it is determined that the user (1201) gets into or off the elevator based on the motion state change of the user (1201); and
determining that the user (1201) arrives at the elevator entrance to wait to get into the target elevator if the geofence to which the elevator corresponds is detected, wherein
the motion state change of the user (1201) comprises the user (1201) converting from a walking state to a stop state, and maintaining a relatively still state;
wherein before the detecting whether there is the geofence to which the elevator corresponds, the method further comprises:
determining whether current time is within a preset time period, wherein the preset time period is determined based on rush hour;
whether there is the geofence to which the elevator corresponds around the elevator comprises:
checking whether a BSSID of the Wi-Fi access point to which the electronic device (100, 1202) is currently connected has corresponding fence data;
obtaining, by the fence management module, the current first Wi-Fi list information if the BSSID of the Wi-Fi access point to which the electronic device (100, 1202) is currently connected corresponds to the target fence data, wherein the current first Wi-Fi list information comprises the address of the Wi-Fi access point that the electronic device (100, 1202) can currently search; and
determining that there is the geofence to which the elevator corresponds around if the quantity of the same addresses of the Wi-Fi access points between the current first Wi-Fi list information and the searchable Wi-Fi list information indicated by the target fence data satisfies the first condition.

11. The method according to claim 10, wherein the method further comprises:
notifying, by the fence management module, the perception module of an event of the user (1201) arriving at the elevator entrance to wait for the elevator,
notifying, by the perception module, the network acceleration service module of the event of the user (1201) arriving at the elevator entrance to wait for the elevator, and
notifying, by the network acceleration service module, the first application of the event of the user (1201) arriving at the elevator entrance to wait for the elevator; and
the performing, by the first application of the electronic device (100, 1202), network acceleration processing comprises:
receiving, by the first application, the event of the user (1201) arriving at the elevator entrance to wait for the elevator, and performing network acceleration processing.

12. The method according to any one of claims 10 to 11, wherein the electronic device (100, 1202) further comprises a policy execution module and a path management module, and the method further comprises:
determining, by the fence management module, the user (1201) getting into the elevator, and notifying the perception module of an event of the user (1201) getting into the elevator;
notifying, by the perception module, the decision module of the event of the user (1201) getting into the elevator;
sending, by the decision module, a better-path request to the path management module when receiving the event of the user (1201) getting into the elevator, wherein the better-path request is used to request a better-quality network channel than the current network channel;
activating and probing, by the path management module, network quality of each network channel, determining that there is the better-quality network channel than the current network channel, and notifying the decision module of the better network channel;
indicating, by the decision module, the policy execution module to switch the data flow of the first application to the better network channel; and
switching, by the policy execution module, the data flow of the first application to the better network channel;
detecting, by the fence management module, the user (1201) getting off the elevator, and notifying the perception module of an event of the user (1201) getting off the elevator;
notifying, by the perception module, the decision module of the event of the user (1201) getting off the elevator; and
switching, by the decision module, the data flow of the first application back to the Wi-Fi network after receiving the event of the user (1201) getting off the elevator.

13. The method according to any one of claims 10 to 12, wherein when the first application is switched to a background or shut down, the method further comprises:
sending, by the first application, a de-registration request to the network acceleration service module, wherein the de-registration request is used to request to stop the elevator prediction service;
sending, by the network acceleration service module, the de-registration request to the perception module;
sending, by the perception module, the de-registration request to the fence management module; and
stopping, by the fence management module, the elevator prediction service of the first application, and no longer notifying the first application of whether the user (1201) gets into the elevator;
notifying, by the perception module, the decision module of stopping QoE measurement for the first application;
notifying, by the decision module, the policy execution module of stopping the QoE measurement for the first application; and
stopping, by the policy execution module, the QoE measurement for the first application.

14. An electronic device (100, 1202), comprising a processor (110), wherein the processor (110) is configured to run a computer program stored in a memory (121), to enable the electronic device (100, 1202) to implement the method according to any one of claims 1 to 13.

15. A computer-readable storage medium, wherein the computer-readable storage medium stores a computer program, and when the computer program is run on an electronic device (100, 1202), the electronic device (100, 1202) performs the method according to any one of claims 1 to 13 is implemented.

## Patentansprüche

1. Ein Netzwerkbeschleunigungsverfahren, angewendet auf ein elektronisches Gerät (100, 1202), umfassend:
Ausführen einer ersten Anwendung durch das elektronische Gerät (100, 1202);
Ermitteln eines Quality-of-Experience-(QoE)-Messergebnisses der ersten Anwendung;
Sammeln von Verzögerungs-Fingerprint-Informationen, falls das QoE-Messergebnis eine Verzögerung aufweist;
Anpassen von mindestens einem Zaundatenelement eines Geofence, dem ein Zielaufzug entspricht, basierend auf den Verzögerungs-Fingerprint-Informationen; Vorhersagen durch das elektronische Gerät (100, 1202), ob ein Benutzer (1201) darauf wartet, in den Zielaufzug einzusteigen, basierend auf dem/den angepassten Zaundatenelement(en) eines Geofence, dem der Zielaufzug entspricht; und
Durchführen der Netzwerkbeschleunigungsverarbeitung durch die erste Anwendung des elektronischen Geräts (100, 1202), falls ermittelt wird, dass der Benutzer (1201) darauf wartet, in den Zielaufzug einzusteigen, wobei die Netzwerkbeschleunigungsverarbeitung mindestens einen der folgenden Schritte umfasst: Zwischenspeichern von Betriebsdaten der ersten Anwendung im Voraus, Reduzierung der Bildwiederholrate der ersten Anwendung, Reduzierung der Datenrate der ersten Anwendung oder Reduzierung der Auflösung der ersten Anwendung.

2. Verfahren nach Anspruch 1, wobei das elektronische Gerät mindestens ein Zaundatenelement eines Geofence speichert, dem ein Aufzug entspricht, wobei die Zauninformationen eine Adresse eines WLAN-Zugangspunkts umfassen, mit dem sich das elektronische Gerät (100, 1202) in der Nähe des Aufzugs verbinden kann, sowie durchsuchbare WLAN-Listeninformationen, und die WLAN-Listeninformationen mindestens eine Adresse eines WLAN-Zugangspunkts enthalten; und
das Vorhersagen durch das elektronische Gerät (100, 1202), ob ein Benutzer (1201) darauf wartet, in einen Zielaufzug einzusteigen, umfasst:
Ermitteln der Ziel-Zauninformationen aus mindestens einem Zaundatenelement des Geofence, dem der Aufzug entspricht, wobei die durch die Ziel-Zauninformationen angegebene Adresse des WLAN-Zugangspunkts, mit dem eine Verbindung möglich ist, mit einer Adresse eines WLAN-Zugangspunkts übereinstimmt, mit dem das elektronische Gerät (100, 1202) derzeit verbunden ist;
Ermitteln der aktuellen ersten WLAN-Listeninformationen durch das elektronische Gerät (100, 1202), wobei die aktuellen ersten WLAN-Listeninformationen eine Adresse eines WLAN-Zugangspunkts enthalten, den das elektronische Gerät (100, 1202) derzeit finden kann; und
Feststellen, dass der Benutzer (1201) darauf wartet, in den Zielaufzug einzusteigen, wenn die Anzahl übereinstimmender Adressen von WLAN-Zugangspunkten zwischen den aktuellen ersten WLAN-Listeninformationen und den durch die Ziel-Zauninformationen angegebenen durchsuchbaren WLAN-Listeninformationen eine erste Bedingung erfüllt.

3. Verfahren nach Anspruch 2, wobei die Wi-Fi-Listeninformationen weiterhin die Signalstärke eines Netzwerks umfassen, das der Adresse des Wi-Fi-Zugangspunkts entspricht, und bevor festgestellt wird, dass der Benutzer (1201) darauf wartet, in den Zielaufzug einzusteigen, umfasst das Verfahren weiterhin:
eine Anzahl von abgleichbaren Wi-Fi-Netzwerkzugangspunkten an denselben Adressen der Wi-Fi-Netzwerkzugangspunkte, die eine zweite Bedingung erfüllen, wobei der abgleichbare Wi-Fi-Netzwerkzugangspunkt ein Wi-Fi-Netzwerkzugangspunkt an derselben Adresse ist, bei dem der Unterschied in der entsprechenden Signalstärke des Netzwerks einen ersten Schwellenwert unterschreitet.

4. Verfahren nach Anspruch 2, wobei
die erste Bedingung darin besteht, dass die Anzahl der gleichen Adressen der Wi-Fi-Zugangspunkte zwischen den aktuellen ersten Wi-Fi-Listeninformationen und den Zielzaun-Daten einen zweiten Schwellenwert übersteigt, oder
die erste Bedingung darin besteht, dass das Verhältnis der Anzahl der gleichen Adressen der Wi-Fi-Zugangspunkte zwischen den aktuellen ersten Wi-Fi-Listeninformationen und den Zielzaun-Daten zur Anzahl aller Wi-Fi-Zugangspunkte in den Zielzaun-Daten einen dritten Schwellenwert übersteigt;
und
die zweite Bedingung darin besteht, dass die Anzahl der abgleichbaren Wi-Fi-Netzwerkzugangspunkte einen vierten Schwellenwert übersteigt, oder
die zweite Bedingung darin besteht, dass das Verhältnis der Anzahl der abgleichbaren Wi-Fi-Netzwerkzugangspunkte zur Anzahl aller Wi-Fi-Zugangspunkte in den Zielzaun-Daten einen fünften Schwellenwert übersteigt.

5. Verfahren nach einem der Ansprüche 1 bis 4, wobei die elektronische Vorrichtung (100, 1202) ein Zaunverwaltungmodul umfasst, wobei
das Zaunverwaltungmodul dazu eingerichtet ist, die zweiten Wi-Fi-Listeninformationen zu erfassen, wenn der Benutzer (1201) in den Aufzug einsteigt oder diesen verlässt, wenn festgestellt wird, dass der Benutzer (1201) in den Aufzug einsteigt oder diesen verlässt und die elektronische Vorrichtung (100, 1202) mit dem Wi-Fi-Netzwerk verbunden ist, und
auf Grundlage der zweiten Wi-Fi-Listeninformationen mindestens ein Zaun-Datum des Geofences zu clustern, dem der Aufzug zugeordnet ist, oder die zweiten Wi-Fi-Listeninformationen an den Server zu senden und mindestens ein Zaun-Datum des Geofences, dem der Aufzug zugeordnet ist, vom Server zu empfangen.

6. Verfahren nach Anspruch 5, wobei die elektronische Vorrichtung (100, 1202) weiterhin ein Wahrnehmungsmodul umfasst, und das Verfahren weiterhin umfasst:
dass das Wahrnehmungsmodul erkennt, dass die erste Anwendung gestartet wird, und abfragt, ob die erste Anwendung die Netzwerkbeschleunigung unterstützt, wobei
Das Wahrnehmungsmodul umfasst eine Anwendungskonfigurationsbibliothek, in der Informationen darüber gespeichert sind, ob eine Vielzahl von Anwendungsprogrammen die Netzwerkbeschleunigung unterstützen, und die Vielzahl von Anwendungsprogrammen umfasst die erste Anwendung, wobei
die Vielzahl von Anwendungsprogrammen in der Anwendungskonfigurationsbibliothek Anwendungsprogramme sind, die die Netzwerkbeschleunigung benötigen und auf Grundlage des Datenverbrauchs des Benutzers (1201) und der Benutzervorlieben (1201) für eine Anwendung bestimmt werden, oder die Vielzahl von Anwendungsprogrammen in der Anwendungskonfigurationsbibliothek Anwendungen sind, die die Netzwerkbeschleunigung benötigen und auf Grundlage einer manuellen Einstellung durch den Benutzer (1201) bestimmt werden.

7. Das Verfahren nach Anspruch 6, wobei das elektronische Gerät (100, 1202) ferner ein Entscheidungsmodul umfasst und eine Kernel-Schicht des elektronischen Geräts (100, 1202) ferner ein Flussberichtmodul umfasst, und das Verfahren ferner umfasst:
Sendet das Wahrnehmungsmodul eine Anfrage zur Bewertung der Netzwerkqualität an das Entscheidungsmodul, wenn festgestellt wird, dass die erste Anwendung die Netzwerkbeschleunigung unterstützt, wobei die Anfrage zur Bewertung der Netzwerkqualität eine Anwendungskennung der ersten Anwendung, Konfigurationsinformationen der Anwendung und ein Kriterium zur Bewertung der Netzwerkqualität umfasst, und die Konfigurationsinformationen der Anwendung ein Header-Merkmal eines Datenpakets enthalten, wenn die erste Anwendung einen Datenfluss überträgt;
Registriert das Entscheidungsmodul einen Nachrichtenüberwachungs-Hook beim Flussberichtmodul, wobei der Nachrichtenüberwachungs-Hook dazu verwendet wird, regelmäßig einen Pfad eines von der ersten Anwendung genutzten Netzwerkkanals zu überprüfen und ein Kommunikationsparameter sowie statistische Informationen des über den von der ersten Anwendung genutzten Netzwerkkanal übertragenen Datenflusses zu überwachen.

8. Das Verfahren nach Anspruch 7, wobei das elektronische Gerät (100, 1202) ferner ein Flussmanagementmodul umfasst, und das Verfahren ferner umfasst:
Das Flussberichtmodul berichtet regelmäßig die Kommunikationsparameter und die statistischen Informationen des Datenflusses der ersten Anwendung an das Flussmanagementmodul, wobei der Kommunikationsparameter mindestens einen der folgenden umfasst: Protokolltyp, Quell-Internetprotokoll-IP-Adresse und Port/Ziel-IP-Adresse und Port oder eine Nachrichtenkennung und die statistischen Informationen mindestens einen der folgenden umfassen: Round Trip Time (RTT), Paketrate, übertragene Byteanzahl oder Rate;
Das Flussmanagementmodul führt regelmäßig anhand des Kommunikationsparameters und der statistischen Informationen eine Bewertung der Netzwerkqualität durch, um ein aktuelles Qualitätsmessungsergebnis des Nutzererlebnisses (QoE) zu erhalten; und
periodisches Berichten des aktuellen QoE-Messergebnisses durch das Flussmanagementmodul an das Entscheidungsmodul.

9. Verfahren nach einem der Ansprüche 5 bis 8, wobei die elektronische Vorrichtung (100, 1202) weiterhin ein Netzwerkbeschleunigungsdienstmodul umfasst und das Verfahren weiterhin Folgendes umfasst:
Senden einer Registrierungsanfrage durch die erste Anwendung an das Netzwerkbeschleunigungsdienstmodul, wobei die Registrierungsanfrage dazu dient, einen Aufzugsprognosedienst anzufordern, damit die erste Anwendung erkennen kann, ob der Benutzer (1201) am Aufzugseingang angekommen ist, um auf den Einlass in den Zielaufzug zu warten;
Senden der Registrierungsanfrage durch das Netzwerkbeschleunigungsdienstmodul an das Erfassungsmodul; und
Senden der Registrierungsanfrage durch das Erfassungsmodul an das Zaunverwaltungsmodul;
Nachdem das Zaunverwaltungsmodul die Registrierungsanfrage erhalten hat, falls festgestellt wird, dass die erste Anwendung die Netzwerkbeschleunigung unterstützt, im Vordergrund läuft und eine Aufzugsprognoseberechtigung besitzt, werden Anwendungsinformationen der ersten Anwendung aufgezeichnet und ein Registrierungsergebnis an das Erfassungsmodul gesendet, wobei das Registrierungsergebnis als erfolgreich erscheint;
Senden des Registrierungsergebnisses durch das Erfassungsmodul an das Netzwerkbeschleunigungsdienstmodul; und
Senden des Registrierungsergebnisses durch das Netzwerkbeschleunigungsdienstmodul an die erste Anwendung.

10. Verfahren nach Anspruch 9, wobei das Verfahren weiterhin Folgendes umfasst:
Überwachen einer Bewegungszustandsänderung des Benutzers (1201) durch das Zaunverwaltungsmodul;
Ermitteln, ob ein Geofence, dem der Aufzug zugeordnet ist, existiert, wenn festgestellt wird, dass der Benutzer (1201) basierend auf seiner Bewegungszustandsänderung in den Aufzug ein- oder aussteigt; und
Feststellen, dass der Benutzer (1201) am Eingang des Aufzugs angekommen ist, um auf den Einlass in den Zielaufzug zu warten, wenn ein Geofence, dem der Aufzug zugeordnet ist, erkannt wurde, wobei
die Bewegungszustandsänderung des Benutzers (1201) beinhaltet, dass der Benutzer (1201) vom Gehzustand in einen Stoppzustand wechselt und einen relativ stillen Zustand beibehält;
wobei vor dem Ermitteln, ob ein Geofence, dem der Aufzug zugeordnet ist, existiert, das Verfahren weiterhin Folgendes umfasst:
Bestimmen, ob die aktuelle Zeit innerhalb eines voreingestellten Zeitraums liegt, wobei der voreingestellte Zeitraum auf der Stoßzeit basiert;
Ob es ein Geofence gibt, dem der Aufzug in unmittelbarer Umgebung zugeordnet ist, umfasst:
Überprüfen, ob eine BSSID des Wi-Fi-Zugangspunkts, mit dem das elektronische Gerät (100, 1202) derzeit verbunden ist, entsprechende Zaun-Daten enthält;
Abrufen der aktuellen ersten Wi-Fi-Listeninformationen durch das Zaunverwaltung-Modul, wenn die BSSID des Wi-Fi-Zugangspunkts, mit dem das elektronische Gerät (100, 1202) derzeit verbunden ist, den Ziel-Zaun-Daten entspricht, wobei die aktuellen ersten Wi-Fi-Listeninformationen die Adresse des Wi-Fi-Zugangspunkts enthalten, den das elektronische Gerät (100, 1202) derzeit finden kann; und
Bestimmen, dass sich der Geofence, dem der Aufzug entspricht, in der Nähe befindet, wenn die Anzahl der identischen Adressen der Wi-Fi-Zugangspunkte zwischen den aktuellen ersten Wi-Fi-Listeninformationen und den durch die Ziel-Zaun-Daten angegebenen auffindbaren Wi-Fi-Listeninformationen die erste Bedingung erfüllt.

11. Das Verfahren nach Anspruch 10, wobei das Verfahren ferner umfasst:
Benachrichtigung des Wahrnehmungsmoduls durch das Zaunverwaltung-Modul über ein Ereignis, dass der Benutzer (1201) am Aufzugseingang ankommt, um auf den Aufzug zu warten,
Benachrichtigung des Netzbeschleunigungsdienstmoduls durch das Wahrnehmungsmodul über das Ereignis, dass der Benutzer (1201) am Aufzugseingang ankommt, um auf den Aufzug zu warten, und
Benachrichtigung der ersten Anwendung durch das Netzbeschleunigungsdienstmodul über das Ereignis, dass der Benutzer (1201) am Aufzugseingang ankommt, um auf den Aufzug zu warten; und
Das Durchführen der Netzwerkbeschleunigungsverarbeitung durch die erste Anwendung des elektronischen Geräts (100, 1202) umfasst:
Empfangen des Ereignisses, dass der Benutzer (1201) am Aufzugseingang ankommt, um auf den Aufzug zu warten, durch die erste Anwendung und Durchführen der Netzwerkbeschleunigungsverarbeitung.

12. Das Verfahren nach einem der Ansprüche 10 bis 11, wobei das elektronische Gerät (100, 1202) ferner ein Politikausführungsmodul und ein Pfadverwaltungsmodul umfasst, und das Verfahren umfasst ferner:
Feststellen durch das Zaunverwaltung-Modul, dass der Benutzer (1201) in den Aufzug einsteigt, und Benachrichtigung des Wahrnehmungsmoduls über ein Ereignis, dass der Benutzer (1201) in den Aufzug einsteigt;
Benachrichtigung des Entscheidungsmoduls durch das Wahrnehmungsmodul über das Ereignis, dass der Benutzer (1201) in den Aufzug einsteigt;
Senden einer besseren Pfadanfrage durch das Entscheidungsmodul an das Pfadverwaltungsmodul beim Empfang des Ereignisses, dass der Benutzer (1201) in den Aufzug einsteigt, wobei die bessere Pfadanfrage dazu dient, einen Netzwerkkanal mit besserer Qualität als der aktuelle Netzwerkkanal anzufordern;
Aktivieren und Abfragen der Netzwerkqualität jedes Netzwerkanalys, durch das Pfadmanagementmodul, Bestimmen, dass ein Netzwerkanal mit besserer Qualität als der aktuelle Netzwerkanal vorhanden ist, und Benachrichtigen des Entscheidungsmoduls über den besseren Netzwerkanal;
Anweisen des Entscheidungsmoduls an das Richtliniendurchführungsmodul, den Datenstrom der ersten Anwendung auf den besseren Netzwerkanal umzuschalten; und
Umschalten des Datenstroms der ersten Anwendung auf den besseren Netzwerkanal durch das Richtliniendurchführungsmodul;
Erkennen durch das Geozaun-Managementmodul, dass der Benutzer (1201) den Aufzug verlässt, und Benachrichtigen des Erfassungsmoduls über das Ereignis, dass der Benutzer (1201) den Aufzug verlässt;
Benachrichtigen des Entscheidungsmoduls durch das Erfassungsmodul über das Ereignis, dass der Benutzer (1201) den Aufzug verlässt; und
Zurückschalten des Datenstroms der ersten Anwendung durch das Entscheidungsmodul auf das Wi-Fi-Netzwerk, nachdem das Ereignis empfangen wurde, dass der Benutzer (1201) den Aufzug verlässt.

13. Verfahren nach einem der Ansprüche 10 bis 12, wobei, wenn die erste Anwendung in den Hintergrund geschaltet oder beendet wird, das Verfahren weiterhin umfasst:
Senden einer Deregistrierungsanfrage durch die erste Anwendung an das Netzwerk-Beschleunigungsdienstmodul, wobei die Deregistrierungsanfrage dazu dient, die Beendigung des Aufzugvorhersagedienstes zu beantragen;
Senden der Deregistrierungsanfrage durch das Netzwerk-Beschleunigungsdienstmodul an das Erfassungsmodul;
Senden der Deregistrierungsanfrage durch das Erfassungsmodul an das Geozaun-Managementmodul; und
Beenden des Aufzugvorhersagedienstes der ersten Anwendung durch das Geozaun-Managementmodul und keine weitere Benachrichtigung der ersten Anwendung darüber, ob der Benutzer (1201) den Aufzug betritt;
Benachrichtigen des Entscheidungsmoduls durch das Erfassungsmodul über die Beendigung der QoE-Messung für die erste Anwendung;
Benachrichtigen des Richtliniendurchführungsmoduls durch das Entscheidungsmodul über die Beendigung der QoE-Messung für die erste Anwendung; und
Beenden der QoE-Messung für die erste Anwendung durch das Richtliniendurchführungsmodul.

14. Elektronische Vorrichtung (100, 1202), umfassend einen Prozessor (110), wobei der Prozessor (110) so konfiguriert ist, ein im Speicher (121) gespeichertes Computerprogramm auszuführen, um die elektronische Vorrichtung (100, 1202) zur Durchführung des Verfahrens nach einem der Ansprüche 1 bis 13 zu befähigen.

15. Ein computerlesbares Speichermedium, wobei das computerlesbare Speichermedium ein Computerprogramm speichert und, wenn das Computerprogramm auf einer elektronischen Vorrichtung (100, 1202) ausgeführt wird, die elektronische Vorrichtung (100, 1202) das Verfahren gemäß einem der Ansprüche 1 bis 13 ausführt.

## Revendications

1. Procédé d'accélération du réseau, appliqué à un dispositif électronique (100, 1202), comprenant :
exécution, par le dispositif électronique (100, 1202), d'une première application ;
obtention, d'un résultat de mesure de qualité d'expérience (QoE) de la première application ;
collecte d'informations d'empreinte de latence si le résultat de mesure QoE semble être en retard ;
modification d'au moins une donnée de clôture d'une géoclôture à laquelle correspond un ascenseur cible sur la base des informations d'empreinte de latence ; prédiction, par le dispositif électronique (100, 1202), du fait qu'un utilisateur (1201) attend d'entrer dans l'ascenseur cible sur la base d'au moins une donnée de clôture modifiée de la géoclôture à laquelle correspond l'ascenseur cible ; et
exécution, par la première application du dispositif électronique (100, 1202), d'un traitement d'accélération de réseau s'il est déterminé que l'utilisateur (1201) attend d'entrer dans l'ascenseur cible, ledit traitement d'accélération de réseau comprenant au moins une des opérations suivantes : la mise en cache préalable des données d'opération de la première application, la réduction de la fréquence d'image de la première application, la réduction du débit binaire de la première application ou la réduction de la résolution de la première application.

2. Procédé selon la revendication 1, dans lequel le dispositif électronique stocke au moins une donnée de clôture d'une géoclôture à laquelle correspond un ascenseur, la donnée de clôture comprenant une adresse d'un point d'accès Wi-Fi auquel le dispositif électronique (100, 1202) peut être connecté à proximité de l'ascenseur et des informations sur une liste Wi-Fi détectable, les informations de la liste Wi-Fi comprenant l'adresse d'au moins un point d'accès Wi-Fi ; et
la prédiction, par le dispositif électronique (100, 1202), du fait qu'un utilisateur (1201) attend d'entrer dans un ascenseur cible comprend :
obtention des données de clôture cibles à partir d'au moins une donnée de clôture de la géoclôture à laquelle correspond l'ascenseur, l'adresse du point d'accès Wi-Fi qui peut être connecté, indiquée par les données de clôture cibles, étant la même que celle du point d'accès Wi-Fi auquel le dispositif électronique (100, 1202) est actuellement connecté ;
obtention, par le dispositif électronique (100, 1202), des informations de la première liste Wi-Fi actuelle, les informations de la première liste Wi-Fi actuelle comprenant l'adresse d'un point d'accès Wi-Fi que le dispositif électronique (100, 1202) peut rechercher actuellement ; et
détermination que l'utilisateur (1201) attend d'entrer dans l'ascenseur cible si une quantité d'adresses identiques de points d'accès Wi-Fi entre les informations de la première liste Wi-Fi actuelle et les informations de la liste Wi-Fi détectable indiquées par les données de clôture cibles satisfait une première condition.

3. Le procédé selon la revendication 2, dans lequel les informations de la liste Wi-Fi comprennent en outre la puissance du signal d'un réseau correspondant à l'adresse du point d'accès Wi-Fi, et, avant de déterminer que l'utilisateur (1201) attend d'entrer dans l'ascenseur cible, le procédé comprend en outre :
une quantité de points d'accès réseau Wi-Fi appariables aux mêmes adresses des points d'accès réseau Wi-Fi satisfaisant à une seconde condition, et le point d'accès réseau Wi-Fi app ariable étant un point d'accès réseau Wi-Fi à la même adresse pour lequel la différence des puissances de signal correspondantes est inférieure à un premier seuil.

4. Le procédé selon la revendication 2, dans lequel
la première condition est que la quantité des mêmes adresses de points d'accès Wi-Fi entre les informations de la première liste Wi-Fi actuelle et les données de clôture cible dépasse un second seuil, ou
la première condition est qu'un ratio de la quantité des mêmes adresses de points d'accès Wi-Fi entre les informations de la première liste Wi-Fi actuelle et les données de clôture cible par rapport à la quantité de tous les points d'accès Wi-Fi dans les données de clôture cible dépasse un troisième seuil ;
et
la seconde condition est que la quantité de points d'accès réseau Wi-Fi appariables dépasse un quatrième seuil, ou
la seconde condition est qu'un ratio de la quantité de points d'accès réseau Wi-Fi appariables par rapport à la quantité de tous les points d'accès Wi-Fi dans les données de clôture cible dépasse un cinquième seuil.

5. Le procédé selon l'une des revendications 1 à 4, dans lequel le dispositif électronique (100, 1202) comprend un module de gestion de clôture, dans lequel
le module de gestion de clôture est configuré pour collecter la deuxième information de liste Wi-Fi lorsque l'utilisateur (1201) entre ou sort de l'ascenseur, lorsqu'il est déterminé que l'utilisateur (1201) entre ou sort de l'ascenseur et que le dispositif électronique (100, 1202) est connecté au réseau Wi-Fi, et
regrouper, sur la base de la deuxième information de liste Wi-Fi, pour générer au moins une donnée de clôture de la géoclôture à laquelle l'ascenseur correspond, ou envoyer la deuxième information de liste Wi-Fi au serveur, et recevoir au moins une donnée de clôture de la géoclôture à laquelle l'ascenseur correspond depuis le serveur.

6. Le procédé selon la revendication 5, dans lequel le dispositif électronique (100, 1202) comprend en outre un module de perception, et le procédé comprend en outre :
détecter, par le module de perception, que la première application est lancée, et interroger si la première application prend en charge l'accélération du réseau, dans lequel
le module de perception comprend une bibliothèque de configuration d'applications dans laquelle sont stockées des informations indiquant si une pluralité de programmes d'application prennent en charge l'accélération du réseau, et la pluralité de programmes d'application comprend la première application, dans lequel
la pluralité de programmes d'application dans la bibliothèque de configuration d'applications sont des programmes nécessitant l'accélération du réseau déterminés sur la base de la consommation de données de l'utilisateur (1201) et de la préférence d'utilisation de l'utilisateur (1201) pour une application, ou bien la pluralité de programmes d'application dans la bibliothèque de configuration d'applications sont des applications nécessitant l'accélération du réseau déterminée selon un réglage manuel de l'utilisateur (1201).

7. Procédé selon la revendication 6, dans lequel le dispositif électronique (100, 1202) comprend en outre un module de décision et une couche noyau du dispositif électronique (100, 1202) comprend en outre un module de rapport de flux, et le procédé comprend en outre :
l'envoi, par le module de perception, d'une demande d'évaluation de la qualité du réseau au module de décision s'il est déterminé que la première application prend en charge l'accélération du réseau, la demande d'évaluation de la qualité du réseau comprenant un identifiant d'application de la première application, les informations de configuration de l'application et un critère pour l'évaluation de la qualité du réseau, les informations de configuration de l'application comprenant une caractéristique d'en-tête d'un paquet de données lorsque la première application transmet un flux de données ;
l'enregistrement, par le module de décision, d'un hook de surveillance des messages auprès du module de rapport de flux, le hook de surveillance des messages étant utilisé pour sonder périodiquement un chemin d'un canal réseau utilisé par la première application et surveiller un paramètre de communication ainsi que des informations statistiques relatives au flux de données transmis via le canal réseau utilisé par la première application.

8. Procédé selon la revendication 7, dans lequel le dispositif électronique (100, 1202) comprend en outre un module de gestion de flux, et le procédé comprend en outre :
la transmission périodique, par le module de rapport de flux, du paramètre de communication et des informations statistiques du flux de données de la première application au module de gestion de flux, le paramètre de communication comprenant au moins l'un des éléments suivants : un type de protocole, une adresse IP source et un port / une adresse IP de destination et un port, ou une caractéristique de message, et les informations statistiques comprenant au moins l'un des éléments suivants : temps aller-retour RTT, taux de perte de paquets, quantité d'octets émis ou reçus, ou un débit ;
l'exécution périodique, par le module de gestion de flux, d'une évaluation de la qualité du réseau sur la base du paramètre de communication et des informations statistiques afin d'obtenir un résultat de mesure de la qualité d'expérience (QoE) actuelle ; et
rapport périodique, par le module de gestion du flux, du résultat actuel de mesure de la QoE au module de décision.

9. Procédé selon l'une quelconque des revendications 5 à 8, dans lequel le dispositif électronique (100, 1202) comprend en outre un module de service d'accélération de réseau, et le procédé comprend en outre :
l'envoi, par la première application, d'une demande d'enregistrement au module de service d'accélération de réseau, la demande d'enregistrement étant utilisée pour demander un service de prédiction d'ascenseur afin que la première application puisse percevoir si l'utilisateur (1201) arrive à l'entrée de l'ascenseur pour attendre de monter dans l'ascenseur cible ;
l'envoi, par le module de service d'accélération de réseau, de la demande d'enregistrement au module de perception ; et
l'envoi, par le module de perception, de la demande d'enregistrement au module de gestion de barrières ;
après que le module de gestion de barrières ait reçu la demande d'enregistrement, s'il est déterminé que la première application prend en charge l'accélération de réseau, s'exécute au premier plan et dispose d'une autorisation de prédiction d'ascenseur, enregistrer les informations d'application de la première application et envoyer un résultat d'enregistrement au module de perception, ledit résultat d'enregistrement étant considéré comme réussi ;
l'envoi, par le module de perception, du résultat d'enregistrement au module de service d'accélération de réseau ; et
l'envoi, par le module de service d'accélération de réseau, du résultat d'enregistrement à la première application.

10. Procédé selon la revendication 9, dans lequel le procédé comprend en outre :
la surveillance, par le module de gestion de barrières, d'un changement d'état de mouvement de l'utilisateur (1201) ;
la détection de l'existence d'une zone géographique à laquelle l'ascenseur correspond lorsqu'il est déterminé que l'utilisateur (1201) monte ou descend de l'ascenseur sur la base du changement d'état de mouvement de l'utilisateur (1201) ; et
la détermination que l'utilisateur (1201) arrive à l'entrée de l'ascenseur pour attendre de monter dans l'ascenseur cible si la zone géographique à laquelle l'ascenseur correspond est détectée, dans laquelle
le changement d'état de mouvement de l'utilisateur (1201) comprend le passage de l'utilisateur (1201) d'un état de marche à un état d'arrêt, et le maintien dans un état relativement immobile ;
dans lequel avant de détecter s'il existe une zone géographique à laquelle l'ascenseur correspond, le procédé comprend en outre:
la détermination si l'heure actuelle est comprise dans une période prédéfinie, la période prédéfinie étant déterminée en fonction des heures de pointe ;
la vérification de l'existence d'une zone géographique à laquelle l'ascenseur correspond autour de l'ascenseur comprend :
vérifier si un BSSID du point d'accès Wi-Fi auquel le dispositif électronique (100, 1202) est actuellement connecté dispose de données de clôture correspondantes ;
obtenir, par le module de gestion de clôture, les informations de la première liste Wi-Fi actuelle si le BSSID du point d'accès Wi-Fi auquel le dispositif électronique (100, 1202) est actuellement connecté correspond aux données de clôture cibles, les informations de la première liste Wi-Fi actuelle comprenant l'adresse du point d'accès Wi-Fi que le dispositif électronique (100, 1202) peut actuellement rechercher ; et
déterminer qu'il existe la géoclôture à laquelle l'ascenseur correspond à proximité si la quantité des mêmes adresses des points d'accès Wi-Fi entre les informations de la première liste Wi-Fi actuelle et les informations de la liste Wi-Fi consultable indiquées par les données de clôture cibles satisfait à la première condition.

11. Le procédé selon la revendication 10, dans lequel le procédé comprend en outre :
notifier, par le module de gestion de clôture, le module de perception de l'événement de l'utilisateur (1201) arrivant à l'entrée de l'ascenseur pour attendre l'ascenseur,
notifier, par le module de perception, le module de service d'accélération du réseau de l'événement de l'utilisateur (1201) arrivant à l'entrée de l'ascenseur pour attendre l'ascenseur, et
notifier, par le module de service d'accélération du réseau, la première application de l'événement de l'utilisateur (1201) arrivant à l'entrée de l'ascenseur pour attendre l'ascenseur ; et
l'exécution, par la première application du dispositif électronique (100, 1202), du traitement d'accélération réseau comprend :
recevoir, par la première application, l'événement de l'utilisateur (1201) arrivant à l'entrée de l'ascenseur pour attendre l'ascenseur, et effectuer un traitement d'accélération réseau.

12. Le procédé selon l'une quelconque des revendications 10 à 11, dans lequel le dispositif électronique (100, 1202) comprend en outre un module d'exécution de politique et un module de gestion de chemin, et le procédé comprend en outre :
déterminer, par le module de gestion de clôture, que l'utilisateur (1201) entre dans l'ascenseur, et notifier le module de perception de l'événement de l'utilisateur (1201) entrant dans l'ascenseur ;
notifier, par le module de perception, le module de décision de l'événement de l'utilisateur (1201) entrant dans l'ascenseur ;
envoyer, par le module de décision, une demande de meilleur chemin au module de gestion de chemin lors de la réception de l'événement de l'utilisateur (1201) entrant dans l'ascenseur, la demande de meilleur chemin étant utilisée pour demander un canal réseau de meilleure qualité que le canal réseau actuel ;
activation et sonde, par le module de gestion de chemin, de la qualité réseau de chaque canal réseau, détermination qu'il existe un canal réseau de meilleure qualité que le canal réseau actuel, et notification du module de décision du meilleur canal réseau ;
indication, par le module de décision, au module d'exécution de la stratégie de basculer le flux de données de la première application vers le meilleur canal réseau ; et
basculement, par le module d'exécution de la stratégie, du flux de données de la première application vers le meilleur canal réseau ;
détection, par le module de gestion des clôtures, que l'utilisateur (1201) sort de l'ascenseur, et notification du module de perception d'un événement lié à la sortie de l'ascenseur de l'utilisateur (1201) ;
notification, par le module de perception, au module de décision de l'événement de la sortie de l'ascenseur de l'utilisateur (1201) ; et
basculement, par le module de décision, du flux de données de la première application vers le réseau Wi-Fi après avoir reçu l'événement de la sortie de l'ascenseur de l'utilisateur (1201).

13. Le procédé selon l'une quelconque des revendications 10 à 12, dans lequel, lorsque la première application est basculée en arrière-plan ou arrêtée, le procédé comprend en outre :
envoi, par la première application, d'une demande de désenregistrement au module de service d'accélération réseau, la demande de désenregistrement étant destinée à demander l'arrêt du service de prédiction d'ascenseur ;
envoi, par le module de service d'accélération réseau, de la demande de désenregistrement au module de perception ;
envoi, par le module de perception, de la demande de désenregistrement au module de gestion des clôtures ; et
arrêt, par le module de gestion des clôtures, du service de prédiction d'ascenseur de la première application, et non notification de la première application de l'entrée de l'utilisateur (1201) dans l'ascenseur ;
notification, par le module de perception, au module de décision de l'arrêt de la mesure QoE pour la première application ;
notification, par le module de décision, au module d'exécution de la stratégie de l'arrêt de la mesure QoE pour la première application ; et
arrêt, par le module d'exécution de la stratégie, de la mesure QoE pour la première application.

14. Dispositif électronique (100, 1202), comprenant un processeur (110), ledit processeur (110) étant configuré pour exécuter un programme informatique stocké dans une mémoire (121), afin de permettre au dispositif électronique (100, 1202) de mettre en œuvre le procédé selon l'une quelconque des revendications 1 à 13.

15. Un support de stockage lisible par ordinateur, ledit support de stockage lisible par ordinateur stockant un programme informatique, et lorsque le programme informatique est exécuté sur un dispositif électronique (100, 1202), le dispositif électronique (100, 1202) met en œuvre le procédé selon l'une quelconque des revendications 1 à 13.
